(19)

**Europäisches Patentamt**
**European Patent Office**
**Office européen des brevets**

(11) **EP 3 435 027 B1**

(12) **EUROPÄISCHE PATENTSCHRIFT**

(45) Veröffentlichungstag und Bekanntmachung des Hinweises auf die Patenterteilung:
**26.10.2022 Patentblatt 2022/43**

(21) Anmeldenummer: **18181383.3**

(22) Anmeldetag: **03.07.2018**

(51) Internationale Patentklassifikation (IPC):
**G01B 11/06** (2006.01) **G02B 21/00** (2006.01)

(52) Gemeinsame Patentklassifikation (CPC):
**G01B 11/06; G02B 21/008**

(54) **KONFOKALMIKROSKOP ZUR SCHICHTDICKENMESSUNG UND MIKROSKOPIEVERFAHREN ZUR SCHICHTDICKENMESSUNG**

CONFOCAL MICROSCOPE FOR MEASURING COATING THICKNESS AND MICROSCOPY METHOD FOR MEASURING COATING THICKNESS

MICROSCOPE CONFOCAL DESTINÉ À MESURER L'ÉPAISSEUR DE COUCHE ET PROCÉDÉ DE MICROSCOPIE DESTINÉ À MESURER L'ÉPAISSEUR DE COUCHE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **25.07.2017 DE 102017116745**

(43) Veröffentlichungstag der Anmeldung:
**30.01.2019 Patentblatt 2019/05**

(73) Patentinhaber: **Carl Zeiss Microscopy GmbH 07745 Jena (DE)**

(72) Erfinder:
• VAUPEL, Dr., Matthias
  37081 Göttingen (DE)
• LANGHOLZ, Dr., Nils
  99510 Apolda (DE)

(74) Vertreter: **Ridderbusch, Oliver Prisma IP Patentanwaltskanzlei Landsberger Straße 155, Haus 1 80687 München (DE)**

(56) Entgegenhaltungen:
**JP-A- 2005 266 084**

• **KATSUICHI KITAGAWA: "Thin film thickness profile measurement using an interferometric surface profiler", PROCEEDINGS OF SPIE, Bd. 6716, 8. Oktober 2007 (2007-10-08), Seite 671607, XP055327453, US DOI: 10.1117/12.754178 ISBN: 978-1-5106-1533-5**
• **CORLE T R ET AL: "DISTANCE MEASUREMENTS BY DIFFERENTIAL CONFOCAL OPTICAL RANGING", APPLIED OPTICS, OPTICAL SOCIETY OF AMERICA, WASHINGTON, DC; US, Bd. 26, Nr. 12, 15. Juni 1987 (1987-06-15), Seiten 2416-2420, XP000941290, ISSN: 0003-6935, DOI: 10.1364/AO.26.002416**
• **GUY COX ET AL: "Measurement of thin coatings in the confocal microscope", MICRON, Bd. 32, Nr. 7, 1. Oktober 2001 (2001-10-01), Seiten 701-705, XP055043338, ISSN: 0968-4328, DOI: 10.1016/S0968-4328(01)00017-8**
• **H-J JORDAN ET AL: "Highly accurate non-contact characterization of engineering surfaces using confocal microscopy", MEASUREMENT SCIENCE AND TECHNOLOGY, IOP, BRISTOL, GB, Bd. 9, Nr. 7, 1. Juli 1998 (1998-07-01), Seiten 1142-1151, XP020064540, ISSN: 0957-0233, DOI: 10.1088/0957-0233/9/7/023**

**Beschreibung**

Die vorliegende Erfindung bezieht sich in einem ersten Aspekt auf ein Konfokalmikroskop zur Schichtdickenmessung nach dem Oberbegriff des Anspruchs 1.

In einem zweiten Gesichtspunkt betrifft die Erfindung ein Mikroskopieverfahren zur Schichtdickenmessung nach dem Oberbegriff des Anspruchs 12.

Zur Schichtdickenmessung mikroskopischer Proben sind verschiedene Verfahren bekannt, insbesondere die Weißlichtinterferenzmikroskopie / Weißlichtspektroskopie, die Ellipsometrie und die Konfokalmikroskopie.

Ein Konfokalmikroskop nutzt eine Lochblende (Pinhole) für die Beleuchtung einer Probe und für die Detektion von Licht, das von der Probe kommt. Das Pinhole kann in einer zum Fokus konjugierten Ebene angeordnet sein (einer Zwischenbildebene), so dass im Wesentlichen nur Licht aus einer beleuchteten Ebene zu einer Lichtmesseinrichtung hinter dem Pinhole gelangt, kaum aber Licht aus anderen Höhenebenen. Dadurch wird eine gute z-Auflösung, das heißt entlang der optischen Achse, erreicht.

Ein gattungsgemäßes Konfokalmikroskop zur Schichtdickenmessung, auf welchem die vorliegende Erfindung beruht, kann eine Lichtquelle zum Aussenden von Beleuchtungslicht umfassen; alternativ kann ein mechanischer Adapter zum Verbinden mit einer Lichtquelle vorgesehen sein. Das gattungsgemäße Konfokalmikroskop umfasst sodann Optikelemente zum Leiten und Fokussieren von Beleuchtungslicht auf eine Probe. Das gattungsgemäße Konfokalmikroskop umfasst außerdem eine Fokusverstelleinrichtung, welche dazu eingerichtet ist, entlang einer optischen Achse des Konfokalmikroskops eine Relativverstellung zwischen einer Fokusposition des Beleuchtungslichts und einer Probenposition vorzunehmen. Hierzu kann die Probe, ein Objektiv oder eine andere der Optikkomponenten in Höhenrichtung verschoben werden oder es kann eine der Optikkomponenten verstellt werden, beispielsweise eine Zoomeinstellung einer Zoomoptik. Das Konfokalmikroskop umfasst weiterhin eine Lichtmesseinrichtung, welche angeordnet ist zum konfokalen Messen von Beleuchtungslicht, welches von der Probe kommt, wobei mit der Lichtmesseinrichtung Messsignale zu unterschiedlichen Einstellungen der Fokusverstelleinrichtung aufnehmbar sind. Das konfokale Messen kann insbesondere durch ein Pinhole im Strahlengang zwischen Probe und Lichtmesseinrichtung erreicht werden. Indem Messsignale zu unterschiedlichen Einstellungen der Fokusverstelleinrichtung aufgenommen werden, kann eine Lichtintensität in Abhängigkeit der z-Fokusposition aufgezeichnet werden.

Die gemessene Lichtintensität weist ein Maximum oder Extremum auf, wenn die z-Fokusposition gerade auf eine der zwei Schichtflächen gerichtet ist, also Oberseite oder Unterseite einer Schicht (beispielsweise einen Übergang Substrat-Schicht und einen Übergang Schicht-Luft). Der Abstand zwischen diesen beiden gemessenen Peaks / Banden gibt Auskunft über die Schichtdicke. Daher umfasst das gattungsgemäße Konfokalmikroskop eine Auswerteeinrichtung zum Bestimmen einer Schichtdicke der Probe, wozu die Auswerteeinrichtung eingerichtet ist, aus einer von der Lichtmesseinrichtung aufgenommenen Messkurve, welche eine gemessene Lichtintensität in Abhängigkeit der Fokusposition angibt, Intensitätsbanden-Positionen von zumindest zwei Intensitätsbanden zu bestimmen und auf Basis einer Positionsdifferenz zwischen den Intensitätsbanden-Positionen auf eine Schichtdicke zu schließen.

In entsprechender Weise sind bei einem gattungsgemäßen Mikroskopieverfahren zur Schichtdickenmessung mit einem Konfokalmikroskop die folgenden Schritte vorgesehen:

- Leiten von Beleuchtungslicht über Optikelemente auf eine Probe;
- Relativverstellen einer Fokusposition des Beleuchtungslichts zu einer Probenposition entlang einer optischen Achse des Konfokalmikroskops mittels einer Fokusverstelleinrichtung;
- konfokales Messen von Beleuchtungslicht, welches von der Probe kommt, mittels einer Lichtmesseinrichtung, wobei mit der Lichtmesseinrichtung Messsignale zu unterschiedlichen Einstellungen der Fokusverstelleinrichtung aufgenommen werden;
- Bestimmen einer Schichtdicke der Probe durch eine Auswerteeinrichtung, wozu die Auswerteeinrichtung aus einer von der Lichtmesseinrichtung aufgenommenen Messkurve, welche eine gemessene Lichtintensität in Abhängigkeit der Fokusposition angibt, Intensitätsbanden-Positionen von zumindest zwei Intensitätsbanden bestimmt und auf Basis einer Positionsdifferenz zwischen den Intensitätsbanden-Positionen auf eine Schichtdicke schließt.

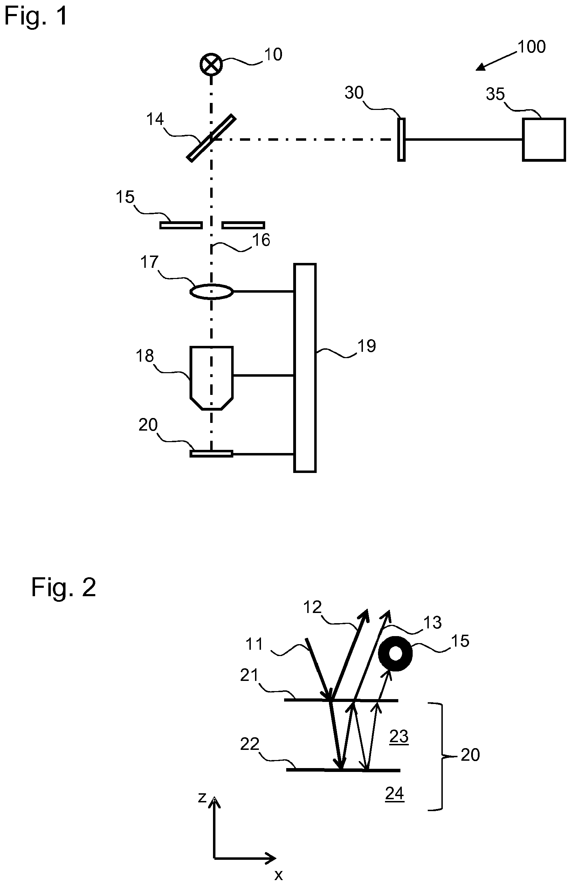

Eine solche Messkurve, wie sie mit einem gattungsgemäßen Konfokalmikroskop aufgenommen wird, ist gezeigt in Fig. 2 aus "Use of Laser Scanning Confocal Microscopy for Characterizing Changes in Film Thickness and Local Surface Morphology of UV-Exposed Polymer Coatings" von Li-Piin Sung et al., JCT Research, Vol. 1, No. 4, Oct. 2004.

Mit einem gattungsgemäßen Konfokalmikroskop können Schichtdicken, die mehrere Mikrometer oder mehr betragen, verhältnismäßig genau gemessen werden. Bei dem oben genannten Artikel von Li-Piin Sung et al. ist die Schichtdicke größer als $4\,\mu m$, womit die zwei Intensitätsbanden gut voneinander getrennt sind. Die meisten Dünnschich-ten, deren Schickdicke unter $2\,\mu m$ liegt, können jedoch mit bekannten Konfokalmikroskopieverfahren nicht präzise in einfacher Weise vermessen werden. Ein Grund liegt darin, dass die beiden gemessenen Intensitätsbanden einander stark überlappen und bekannte Auswertungen der Positionen überlappender Intensitätsbanden zu fehlerhaften Ergebnissen führen.

Eine gängige Variante bekannter Konfokalmikroskope zur Schichtdickenmessung nutzen zum Untersuchen verschiedener Höhenebenen (z-Positionen) eine chromatische Längsaberration des verwendeten Objektivs. Hierdurch fokussiert das Objektiv Licht abhängig von dessen Wellenlänge auf verschiedene z-Positionen.

Für Dünnschichten werden bisher andere Messverfahren als die reine Konfokalmikroskopie zur Dickenmessung eingesetzt, etwa die Weißlichtinterferometrie. Ein Weißlichtinterferometer zur Messung dünner Schichten ist beispielsweise beschrieben in "Application of white-light scanning interferometer on transparent thin-film measurement" von Meng-Chi Li et al. in APPLIED OPTICS, 20 Dec. 2012 / Vol. 51, No. 36.

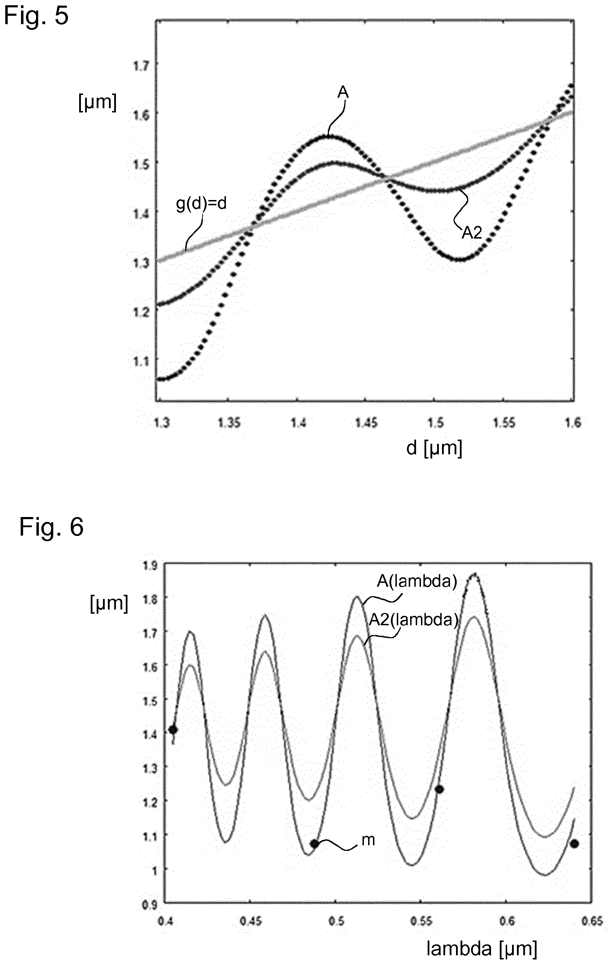

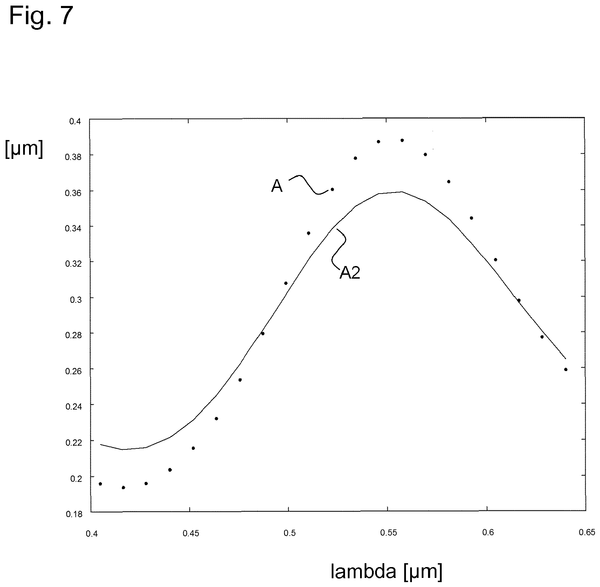

Außerdem werden Abwandlungen von Konfokalmikroskopen verwendet, welche Prinzipien von Weißlichtinterferometern verwenden. Solche Systeme können als chromatische Konfokalinterferometer gestaltet sein, wie beschrieben in "Chromatic confocal spectral interferometry" von Evangelos Papastathopoulos et al., APPLIED OPTICS / Vol. 45, No. 32 / 10 November 2006. Hierbei wird Weißlicht oder Licht verschiedener Wellenlängen auf die Probe geleitet, wobei eine Optikkomponente mit chromatischer Längsaberration verwendet wird, und ein Diagramm von der gemessenen Lichtintensität in Abhängigkeit der Wellenlänge wird ausgewertet, um die Schichtdicke zu ermitteln. Eine ähnliche Kombination aus einem Konfokalmikroskop mit einem Interferometer ist bekannt aus "Separation of measurement of the refractive index and the geometrical thickness by use of a wavelength-scanning interferometer with a confocal microscope" von T. Fukano et al., 1 July 1999 / Vol. 38, No. 19 / APPLIED OPTICS und auch aus DE 10 2010 016 462 B4. In DE 10 2010 016 462 B4 wird ein Lichtintensitätsmaximum abhängig von der verwendeten Wellenlänge ermittelt (Fig. 6 der genannten Patentschrift). Sodann werden die Lichtintensitätsmaxima gegen die Wellenlänge aufgetragen (Kurve 203 in Fig. 7). Indem die Wellenlänge für das Maximum der Kurve 203 bestimmt wird, kann auf den Abstand / das Profil der untersuchten Dünnschicht geschlossen werden; hingegen kann aus der Wellenlängendifferenz 212 zwischen zwei Maxima der Kurve 203 auf die Schichtdicke geschlossen werden.

Zudem sind zum Untersuchen dünner Schichten Kombinationsverfahren bekannt wie eine Kombination aus AFM (Atomic Force Microscopy) und STM (Scanning Tunneling Microscopy), beschrieben in "Atomic Structure of Graphene on $SiO_2$" von Masa Ishigami et al. in Nano Letters 7, 1643 (2007). Auch findet die Ellipsometrie weitgehende Verwendung, siehe beispielsweise "Ellipsometry on thin organic layers of biological interest: characterization and applications" von Hans Arwin, Thin Solid Films 377-378 (2000) 48-56.

Bei JP 2005266084 A ist vorgesehen, eine Intensitätskurve I(z) auszunehmen und die Positionen z0 und z1 der überlappenden Banden zu bestimmen. Hierzu wird eine Fit-Funktion an die aufgenommene Intensitätskurve angepasst, welche der Summe zweier Banden entspricht:. Die Positionen z0 und z1 sind durch den Fit zu bestimmende Parameter, während die Bandenamplituden entweder vorgegeben oder auch angefittet werden und die Funktion an sich durch Referenzmessungen vorab ermittelt wurde. Die Schichtdicke wird dann als Differenz zwischen z0 und z1 multipliziert mit dem Brechungsindex der Schicht angenommen.

Der Artikel "Thin film thickness profile measurement using an interferometric surface profiler", von Katsuichi Kitagawa, in Proceedings of SPIE, Bd. 6716, Oktober 2007 beschreibt ein Interferometer, um die z-Positionen der Ober- und Unterseite einer Schicht zu bestimmen. Die Differenz der ermittelten z-Positionen gibt die Schichtdicke an. Bei dicken Schichten sind die Interferogramme deutlich getrennt. Bei dünnen Schichten hingegen überlappen die Interferenzpeaks. Ein Algorithmus wird verwendet, um die z-Positionen der überlappenden Interferogramm-Signale zu trennen.

In dem Artikel "Distance measurements by differential confocal optical ranging", von Corle et al., in Applied Optics, Bd. 26, Nr. 12, 15. Juni 1987, Seiten 2416-2420, wird ein Messprinzip beschrieben, bei dem eine Probe vibriert wird und die aufgenommenen Signalvariationen dann Rückschlüsse zulassen, ob gerade auf die Probenoberfläche fokussiert ist. Indem ein z-Stapel aufgenommen wird, können die z-Positionen der Probenober- und -unterseite ermittelt werden. Für Dünnschichten wird darauf hingewiesen, dass Interferenz zwischen Lichtanteilen, die an der Oberseite oder Unterseite reflektiert werden, problematisch sind.

Der Artikel "Measurement of thin coatings in the confocal microscope", von Guy Cox et al., in Micron, Bd. 32, Nr. 7, 1. Oktober 2001, beschreibt eine Schichtdickenbestimmung mit einem Konfokalmikroskop. Eine Schichtdicke wird über den Abstand zwischen zwei Intensitätsbanden bestimmt, welche auf eine Reflexion an der Schichtoberseite und Schichtunterseite zurückgehen.

Als eine **Aufgabe** der Erfindung kann das Bereitstellen eines Konfokalmikroskops angesehen werden, bei welchem in einfacher Weise auch dünne Schichten möglichst präzise vermessen werden können. Außerdem soll ein entsprechendes Mikroskopieverfahren zur Schichtdickenmessung angegeben werden.

Diese Aufgabe wird durch das Konfokalmikroskop mit den Merkmalen des Anspruchs 1 und durch das Mikroskopieverfahren mit den Merkmalen des Anspruchs 13 gelöst.

Vorteilhafte Varianten des erfindungsgemäßen Konfokalmikroskops und des erfindungsgemäßen Mikroskopieverfahrens sind Gegenstand der abhängigen Ansprüche und werden außerdem in der folgenden Beschreibung erläutert.

Eine der Erfindung zugrunde liegende Erkenntnis liegt darin, dass in einer Messkurve, welche die Lichtintensität abhängig von der z-Fokusposition wiedergibt, zwei überlappende Intensitätsbanden nicht einfach die Summe von den einzelnen beiden Intensitätsbanden, die auf die beiden Kanten einer Schicht zurückgehen, sind. Dies wäre nur bei nicht-überlappenden Intensitätsbanden der Fall. Bei überlappenden Intensitätsbanden spielt Interferenz eine wichtige Rolle: Bei Reflexionsmessungen interferiert Licht, das an einer Schichtoberkante reflektiert wird, mit Licht, welcher durch die Schicht verläuft und an einer Schichtunterkante zurückgeworfen wird. Bei Transmissionsmessungen interferiert Licht, das ohne Reflexionen die Schicht durchläuft, mit Licht, welches an einer Unterkante und sodann an einer Oberkante der Schicht reflektiert wird. Zudem können auch Mehrfachreflexionen zur Interferenz beitragen. Es wurde erkannt, dass sich durch Interferenz die Positionen der beiden überlappenden Intensitätsbanden verändern. Die Positionsdifferenz zwischen den beiden Intensitätsbanden-Maxima gibt deshalb bei überlappenden Intensitätsbanden nicht korrekt die Schichtdicke wieder. Erfindungsgemäß wird deshalb berücksichtigt, wie die Intensitätsbanden-Positionen durch Interferenz verschoben sind.

Bei dem Konfokalmikroskop der oben genannten Art ist erfindungsgemäß die Auswerteeinrichtung dazu eingerichtet, auf die Schichtdicke mit Hilfe eines mathematischen Modells zu schließen, welches für überlappende Intensitätsbanden eine Abhängigkeit der Intensitätsbanden-Positionen von zumindest einer Lichtwellenlänge und der Schichtdicke unter Berücksichtigung von Interferenz des Beleuchtungslichts an der Schicht bestimmt.

In entsprechender Weise ist gemäß der Erfindung bei dem gattungsgemäßen Mikroskopieverfahren vorgesehen, dass die Auswerteeinrichtung auf die Schichtdicke mit Hilfe eines mathematischen Modells schließt. Das Modell beschreibt für überlappende Intensitätsbanden eine Abhängigkeit der Intensitätsbanden-Positionen von zumindest einer Lichtwellenlänge und der Schichtdicke unter Berücksichtigung von Interferenz des Beleuchtungslichts an der Schicht.

Bei der Schichtdicke kann es sich um die optische Dicke der untersuchten Schicht handeln, die der geometrischen Dicke multipliziert mit dem Brechungsindex entspricht.

Bei Reflexionsmessungen kann das mathematische Modell berücksichtigen, wie sich eine gemessene Lichtintensität sowohl aus Licht, das an einer oberen Schichtkante reflektiert wird, als auch aus Licht, das an einer unteren Schichtkante reflektiert wird, ergibt. Dabei wird auch Interferenz zwischen diesen beiden reflektierten Lichtanteilen berücksichtigt. Auch mehrfach Reflexionen innerhalb der Schicht können berücksichtigt werden. Für die mathematische Beschreibung der Interferenz können die Lichtwellenlänge und die Schichtdicke in das Modell eingehen. Indem nun die Intensitätsbanden-Positionen von den Grenzflächen von Schicht und Substrat ermittelt werden, kann auf die Schichtdicke geschlossen werden. Bei überlappenden Intensitätsbanden liegt eine Herausforderung in der Bestimmung der Intensitätsbanden-Positionen und der Zuordnung zu einer Schichtdicke. Liegt die Intensitätsbande des Films (das heißt der Schicht) beispielsweise um $0,7\,\mu m$ von der Intensitätsbande des Substrats, so wird nicht etwa $0,7\,\mu m$ als Schichtdicke ausgegeben, sondern es wird gemäß dem mathematischen Modell berücksichtigt, wie ein Abstand zwischen den beiden Intensitätsbanden-Positionen bei der verwendeten Wellenlänge und insbesondere weiteren Faktoren wie der numerischen Apertur von der Schichtdicke abhängt. Auch können bereits vorhandene Kenntnisse wie ein erwarteter Schichtdickenbereich in das mathematische Modell eingehen, um eventuelle Mehrdeutigkeiten auszuschließen. Als Ergebnis kann bei einem Abstand von beispielsweise $0,7\,\mu m$ zwischen Positionen von überlappenden Intensitätsbanden von Schicht und Substrat darauf geschlossen werden, dass die tatsächliche Schichtdicke $0,5\,\mu m$ beträgt.

Die Bestimmung einer Intensitätsbanden-Position kann in verschiedener Weise erfolgen. Die Art der Bestimmung beeinflusst auch, wie viel der Abstand zwischen Intensitätsbanden-Positionen von der tatsächlichen Schichtdicke abweicht, was in dem mathematischen Modell berücksichtigt wird. So kann die Auswerteeinrichtung dazu eingerichtet sein, aus einer aufgenommenen Messkurve, welche eine gemessene Lichtintensität in Abhängigkeit der Fokusposition angibt, zu mehreren Intensitätsbanden jeweils eine Intensitätsbanden-Position zu bestimmen, indem aus allen Daten innerhalb einer Halbwertsbreite der jeweiligen Intensitätsbande ein geometrischer Schwerpunkt berechnet wird. In diesem Fall wird also zunächst ein Maximalwert einer Intensitätsbande ermittelt. Sodann wird die Halbwertsbreite ermittelt, das heißt die Bandenbreite an einer Höhe, welche der Hälfte des Maximalwerts dieser Intensitätsbande entspricht. Aus allen Werten innerhalb der Halbwertsbreite wird ein Durchschnitt gebildet, zum Beispiel der Median oder ein geometrischer Schwerpunkt / arithmetischer Durchschnitt, wobei die Ortspositionen mit dem zugehörigen Intensitätswert gewichtet sind. Die so ermittelte Position wird als Intensitätsbanden-Position verwendet. Alternativ kann auch einfach derjenige Positionswert, an dem die Intensitätsbande ihren Maximalwert hat, als Intensitätsbanden-Position verwendet werden. Bei überlappenden Intensitätsbanden hängen die Intensitätsbanden-Position von der Art der Positionsbestimmung ab und unterscheiden sich insbesondere abhängig davon, ob ein Maximalwert einer Intensitätsbande oder ein geometrischer Schwerpunkt der Intensitätsbande als Bandenposition herangezogen wird.

In dem mathematischen Modell können die Intensitätsbanden-Positionen abhängen von (insbesondere vorbekannten) Brechzahlen von einem Material einer zu untersuchenden Schicht sowie von daran angrenzenden Materialien, insbesondere Brechzahlen von einem Trägersubstrat sowie von Luft. Beispielsweise können Reflexionskoeffizienten in das Modell eingehen, welche von diesen Brechzahlen abhängen. Eine Auswirkung auf die gemessene Intensität durch Interferenz, welche durch Lichtreflexion an der Oberkante und Unterkante der zu untersuchenden Schicht entsteht, kann sodann durch die Reflexionskoeffizienten in das Modell eingehen.

Als eine Fitfunktion, bei welcher ein oder mehrere Variablen an die Messdaten angepasst werden, kann das mathematische Modell insbesondere eine Funktion umfassen, welche die Intensitätsbanden-Positionen oder den Verlauf der Intensitätsbanden als Funktion der tatsächlichen Schichtdicke fittet und so die Schichtdicke und gegebenenfalls weitere Parameter der Schicht ermittelt.

Unter Umständen kann derselbe Abstand, das heißt dieselbe Positionsdifferenz, zwischen zwei Intensitätsbanden-Positionen aus unterschiedlichen Schichtdicken resultieren. Eine solche Mehrdeutigkeit kann ausgeräumt werden, indem entweder mehrere verschiedene Messungen durchgeführt werden oder vorbekannte Informationen über die Schicht im mathematischen Modell genutzt werden. Beim Nutzen vorbekannter Informationen kann beispielsweise ein möglicher Schichtdickenbereich bekannt sein und Lösungen des mathematischen Modells, bei denen eine ermittelte Schichtdicke außerhalb dieses Schichtdickenbereichs liegt, werden ausgeschlossen. Im Falle mehrerer Messungen zum Ausräumen von Mehrdeutigkeiten können zum Beispiel unterschiedliche Lichtwellenlängen genutzt werden: So kann zum eindeutigen Zuordnen der Positionsdifferenz zweier Intensitätsbanden-Positionen zu einer Schichtdicke vorgesehen sein, dass mehrere Messkurven mit der Lichtmesseinrichtung aufgenommen werden, wobei die verschiedenen Messkurven mit Beleuchtungslicht unterschiedlicher Wellenlängen aufgenommen werden; Aus jeder Messkurve wird sodann eine jeweilige Positionsdifferenz zweier Intensitätsbanden-Positionen bestimmt. Weil das mathematische Modell auch berücksichtigt, wie die Positionsdifferenz zweier Intensitätsbanden-Positionen von der Lichtwellenlänge abhängt, kann hierdurch die Anzahl möglicher Lösungen des mathematischen Modells verringert werden.

Werden Messungen mit unterschiedlichen Wellenlängen durchgeführt, so sollen hierdurch mehr Messinformationen zu denselben Höhenebenen vorliegen; es soll nicht etwa, wie bei der chromatischen Konfokalmikroskopie eine Optikkomponente / Objektiv mit chromatischer Längsaberration verwendet werden, wodurch unterschiedliche Wellenlängen auf verschiedene Höhenebenen fokussiert würden und hierdurch verschiedene Höhenebenen untersucht würden. Zum Vermeiden, dass Beleuchtungslicht unterschiedlicher Wellenlängen auf verschiedene Höhenebenen fokussiert wird, kann das Konfokalmikroskop ein achromatisches oder apochromatisches Objektiv umfassen. Demgemäß kann es ein oder mehrere Optikelemente mit chromatischer Aberration aufweisen, welche eine chromatische Aberration von übrigen Optikelementen des Objektivs kompensieren oder teilweise kompensieren, bei einem Achromat für zwei bestimmte Wellenlängen, bei einem Apochromat über einen Wellenlängenbereich, insbesondere des Beleuchtungslichts.

Mittels des mathematischen Modells kann eine Fitfunktion, welche Positionsdifferenzen zweier Intensitätsbanden-Positionen in Abhängigkeit der Wellenlänge des Beleuchtungslichts beschreibt, an die bei verschiedenen Wellenlängen ermittelten Positionsdifferenzen angepasst werden. Die anzupassende Variable der Fitfunktion kann hierbei die Schichtdicke oder ein anderer Parameter der Schicht sein. Diese Fitfunktion kann insbesondere eine Wellenform haben.

In einer Abwandlung des beschriebenen Erfindungsgedankens kann durch Anpassen von einer oder mehrerer Variablen des mathematischen Modells an die Messdaten auch ein anderer optischer Parameter der Schicht ermittelt werden, in Ergänzung oder als Alternative zur Schichtdicke. Beispielsweise kann die Brechzahl des Materials der Schicht ermittelt werden, insbesondere wenn die geometrische Schichtdicke vorab bekannt ist.

Alternativ oder zusätzlich zu Messkurven, die mit unterschiedlicher Lichtwellenlänge aufgenommen werden, können auch mehrere Messkurven aufgenommen werden, die sich in einem anderen Parameter unterscheiden, welcher eine Auswirkung auf den Abstand zwischen Positionen überlappender Intensitätsbanden hat. So kann zum eindeutigen Zuordnen der Positionsdifferenz zweier Intensitätsbanden-Positionen zu einer Schichtdicke vorgesehen sein, dass unterschiedliche Pinhole-Einstellungen eines Pinholes einer Konfokalabbildung auf die Lichtmesseinrichtung vorgenommen werden. Für jede Pinhole-Einstellung wird jeweils eine Messkurve mit der Lichtmesseinrichtung aufgenommen. Das mathematische Modell berücksichtigt eine Abhängigkeit einer Positionsdifferenz zweier Intensitätsbanden-Positionen von einer Pinhole-Einstellung, wobei durch Kenntnis der unterschiedlichen Pinhole-Einstellungen Mehrdeutigkeiten im Zuordnen von Positionsdifferenzen zweier Intensitätsbanden-Positionen zu einer Schichtdicke ausgeräumt werden. Die Pinhole-Einstellungen können verschiedene Lateralpositionen und/oder verschiedene Größen eines Pinholes umfassen.

Aus den verschiedenen Messkurven, die sich in den zugehörigen Pinhole-Einstellungen unterscheiden, kann jeweils eine Positionsdifferenz zweier Intensitätsbanden-Positionen ermittelt werden. Mittels des mathematischen Modells kann nun eine Fitfunktion, welche Positionsdifferenzen zweier Intensitätsbanden-Positionen in Abhängigkeit der Pinhole-Einstellung beschreibt, an die bei verschiedenen Pinhole-Einstellungen ermittelten Positionsdifferenzen angepasst werden.

Die unterschiedlichen Einstellungen des Pinholes, mit welchen die verschiedenen Messkurven aufgenommen werden, können in verschiedener Weise erzeugt werden, insbesondere durch:

- eine Größenverstellung des Pinholes zwischen aufeinanderfolgenden Messungen,
- eine Lateralverschiebung des Pinholes zwischen aufeinanderfolgenden Messungen,
- Aufspalten eines Strahlengangs des von der Probe kommenden Lichts auf verschiedene Strahlengänge, in denen unterschiedliche Pinholes angeordnet sind, und insbesondere gleichzeitiges Messen von Beleuchtungslicht hinter jedem der Pinholes, indem die Lichtmesseinrichtung hinter jedem der Pinholes einen jeweiligen Lichtdetektor umfasst.

Die Erfindungsvarianten, bei denen unterschiedliche Pinhole-Einstellungen genutzt werden, können auch kombiniert werden mit Messverfahren, bei denen ohnehin die apparativen Voraussetzungen zum Einstellen unterschiedlicher Pinholes vorhanden sind oder auch zwingend mehrere Messungen mit unterschiedlichen Pinholes durchgeführt werden. Ein solches Verfahren ist der sogenannte Airyscan / Subairyscan. Bei diesem wird eine besonders hohe Lateralauflösung erreicht, welche besser sein kann als die optische Auflösungsgrenze des Systems, indem die Punktverteilungsfunktion (PSD, point spread function), welche die Abbildung eines Probenpunkts auf einen räumlich aufgelösten Detektor bestimmt, vermessen wird. Zum Durchführen eines Airyscans können in einer Zwischenbild- oder Bildebene, das heißt in einem Strahlengang des von der Probe kommenden Beleuchtungslichts, mehrere voneinander lateral getrennte Messwege gebildet sein. Die lateral getrennten Messwege in der Zwischenbild- oder Bildebene können insbesondere gebildet sein durch lateral zueinander versetzte optische Fasern, welche jeweils zu einem Lichtdetektor der Lichtmesseinrichtung führen, oder insbesondere durch mehrere lateral versetzte Sub-Airy-Detektorelemente. Ein Lateralabstand zwischen den lateral getrennten Messwegen ist kleiner als eine Beugungsscheibe, als welche ein Punkt einer Probenebene auf die Messwege abgebildet wird. Dadurch wird ein Probenpunkt stets auf mehrere Messwege (gleichzeitig oder nacheinander) abgebildet und ein Verrechnen der Informationen dieser Messwege erlaubt eine besonders hohe Auflösung. In diesem Zusammenhang soll unter Sub-Airy-Detektorelementen verstanden werden, dass mehrere Detektorelemente so nah beieinander sind, dass eine Entfernung zwischen den Mittelpunkten benachbarter Detektorelemente kleiner ist als eine Beugungsscheibe, als welche ein Probenpunkt mit dem Konfokalmikroskop auf die Ebene der Detektorelemente abgebildet wird. Die getrennte Signalaufnahme in diesen Messwegen entspricht unterschiedlichen Pinhole-Einstellungen, das heißt lateral zueinander versetzten Pinholes. Die unterschiedlichen Einstellungen des Pinholes, durch welche die verschiedenen Messkurven aufgenommen werden, können gebildet sein durch die lateral getrennten Messwege. In anderen Worten werden für einen Airyscan Messungen mit unterschiedlichen Pinholes durchgeführt und diese unterschiedlichen Messungen können auch für die Schichtdickenbestimmung genutzt werden.

Parameter des mathematischen Modells, welche von verwendeten Komponenten des Konfokalmikroskops abhängen oder bestimmt sind, können vorab durch eine Referenzmessung bestimmt werden. Hierdurch kann die Anzahl unbekannter Parameter, welche im Rahmen einer Anpassung einer Fitfunktion an Messdaten zu ermitteln sind, reduziert werden, oder es kann die Genauigkeit vorgegebener Parameter erhöht werden. Solche Parameter können beispielsweise eine numerische Apertur sein, insbesondere von einem Beleuchtungsobjektiv, einem Detektionsobjektiv oder einem sowohl für die Beleuchtung als auch Detektion genutztem Objektiv.

Die oder eine Referenzmessung kann insbesondere umfassen, dass an einer Referenzprobe, welche eine Schicht mit bekannter Schichtdicke umfasst, eine Messkurve aufgenommen wird. Für die Messkurve wird die Fokusebene relativ zur Referenzprobe höhenverstellt, so dass die Messkurve eine Messintensität abhängig von der fokussierten Höhenebene darstellt. In der Messkurve kann der Abstand zwischen zwei (insbesondere überlappenden) Intensitätsbanden-Positionen ermittelt werden, unter Nutzung des mathematischen Modells. In dieser Weise können Parameter des mathematischen Modells ermittelt werden, welche beschreiben, wie der Abstand zwischen zwei Intensitätsbanden-Positionen mit der tatsächlichen, vorab bekannten, Schichtdicke der Referenzprobe zusammenhängt.

Für eine automatische Überprüfung unbekannter Proben ist es sinnvoll, wenn die Auswerteeinrichtung dazu eingerichtet ist, die aufgenommenen Messdaten nicht nur hinsichtlich einer Schichtdicke auszuwerten, sondern auch zu überprüfen, ob überhaupt eine Schicht bzw. Dünnschicht vorhanden ist, deren Schichtdicke zu bestimmen ist. So kann es beispielsweise bei beschichteten Wafern vorkommen, dass Abschnitte fehlerhafterweise unbeschichtet sind. Ein unbeschichteter Abschnitt wird auch als Null-Schicht-System bezeichnet, während eine Schicht auf einem Träger/Substrat als Ein-Schicht-System bezeichnet wird. Zum Überprüfen, ob ein Ein-Schicht-System und kein Null-Schicht-System vorliegt, kann die Auswerteinrichtung dazu eingerichtet sein:

- eine Ein-Schicht-Funktionsanpassung durchzuführen, bei welcher die Messkurve mit zwei Intensitätsbanden beschrieben wird, und

- eine Null-Schicht-Funktionsanpassung durchzuführen, bei welcher die Messkurve mit einer einzigen Intensitätsbande beschrieben wird, und

- ein Ein-Schicht-System anzunehmen, wenn ein Funktionsanpassungsergebnis mit der Ein-Schicht-Funktionsanpassung eine höhere Güte hat als ein Funktionsanpassungsergebnis mit der Null-Schicht-Funktionsanpassung.

Unter einer Funktionsanpassung wird verstanden, dass ein oder mehrere Parameter einer Funktion (Fitfunktion), die sich aus dem mathematischen Modell ergibt, iterativ an die Messdaten angepasst werden. Je kleiner die Abweichung zwischen der Fitfunktion und den Messdaten, desto höher ist die Güte des Funktionsanpassungsergebnisses. Ein ermittelter Schichtdickenwert wird von der Auswerteeinheit nur ausgegeben, wenn ein Ein-Schicht-System und kein Null-Schicht-System angenommen wurde.

Sämtliche beschriebenen Erfindungsvarianten müssen nicht auf ein Ein-Schicht-System beschränkt sein, sondern können auch zum Untersuchen und Beschreiben von Mehrschicht-Systemen verwendet werden. In diesem Fall werden nicht zwei Intensitätsbanden-Positionen aus jeder Messkurve ermittelt, sondern allgemein mindestens zwei. Ist die Anzahl an Schichten vorbekannt, werden n+1 Intensitätsbanden-Positionen in jeder Messkurve ermittelt, wobei n die Anzahl der Schichten ist.

Alternativ oder ergänzend zu den vorgenannten Varianten zum eindeutigen Zuordnen der Positionsdifferenz zweier Intensitätsbanden-Positionen zu einer Schichtdicke können auch die folgenden Verfahrensschritte vorgesehen sein. Die Auswerteeinrichtung und/oder eine Steuereinrichtung können zum Ausführen dieser Verfahrensschritte eingerichtet sein:

- es werden unterschiedliche numerische Aperturen eingestellt, insbesondere von einem Objektiv des Konfokalmikroskops, oder die numerische Apertur zum Leiten von Beleuchtungslicht auf die Probe oder zum Leiten von Beleuchtungslicht, das von der Probe kommt;
- für jede eingestellte numerische Apertur wird jeweils eine Messkurve mit der Lichtmesseinrichtung aufgenommen; und
- das mathematische Modell beschreibt eine Abhängigkeit einer Positionsdifferenz zweier Intensitätsbanden-Positionen von der numerischen Apertur, wobei insbesondere bei Kenntnis der eingestellten numerischen Aperturen Mehrdeutigkeiten im Zuordnen von Positionsdifferenzen zweier Intensitätsbanden-Positionen zu einer Schichtdicke ausgeräumt werden.

Bei dieser Variante wird ausgenutzt, dass ein ermittelter Abstand zwischen den Intensitätsbanden-Positionen überlappender Intensitätsbanden auch von der numerischen Apertur abhängt. Wird die numerische Apertur verändert, verändert sich auch der Abstand zwischen Intensitätsbanden-Positionen. Indem mehrere Messkurven hinsichtlich des Abstands zwischen zwei Intensitätsbanden-Positionen ausgewertet werden, kann aus diesen mehreren Abständen präziser eine Schichtdicke ermittelt werden.

Außer der Schichtdicke können auch weitere Eigenschaften der Probe oder Schicht mit Hilfe des mathematischen Modells ermittelt werden. Insbesondere kann zusätzlich zur Schichtdicke auch eine Oberflächentopographie ermittelt werden, indem mehrere lateral versetzte Probenbereiche/Probenpunkte untersucht werden. Insbesondere können die Positionen der jeweils vorderen Intensitätsbande aus den Messkurven miteinander verglichen werden; hieraus kann eine Oberflächentopographie ermittelt werden. In entsprechender Weise kann aus einem Vergleich der Positionen der jeweils hinteren Intensitätsbande aus den Messkurven eine Topographie der Substratoberfläche ermittelt werden. Sind mehrere Schichten übereinander angeordnet, können entsprechend der Anzahl an Intensitätsbandenposition mehrere Topographien berechnet werden.

Wird für mehrere lateral versetzte Probenpunkte jeweils eine Schichtdicke ermittelt, so kann durch einen Intensitätsvergleich der zu den Probenpunkten aufgenommenen Messkurven auch eine Extinktionskarte zu den Probenpunkten ermittelt werden. Dabei gibt die Extinktionskarte zu jedem Probenpunkt einen Extinktionswert oder einen Relativwert der Extinktion relativ zu den übrigen Probenpunkten an. Die Extinktion des Schichtmaterials an einem Probenpunkt kann als umso höher angenommen werden, je niedriger die hintere Intensitätsbande ist, während die vordere Intensitätsbande, welche näher zum Objektiv des Beleuchtungslichts liegt als die hintere Intensitätsbande, in ihrer Höhe weitgehend unabhängig von der Extinktion ist.

Die Optikelemente des Konfokalmikroskops können insbesondere ein Objektiv umfassen, welches sowohl dem Beleuchten der Probe dient als auch dem Leiten von Licht, das von der Probe kommt, zur Lichtmesseinrichtung. Alternativ können die Optikelemente auch zumindest zwei Objektive umfassen, von denen eines zur Beleuchtung und eines zum Leiten von von der Probe kommendem Licht angeordnet sind.

Die Fokusverstelleinrichtung kann prinzipiell jede Stelleinrichtung sein, mit welcher eine Relativposition zwischen einem Fokus des Beleuchtungslichts und der Probenposition entlang der optischen Achse, das heißt in Propagationsrichtung des Beleuchtungslichts, verstellbar ist. Hierzu kann die Fokusverstelleinrichtung eine Stelleinrichtung zur Höhenverstellung einer Probenhalterung / eines Probentisches umfassen oder eine Stelleinrichtung zum Verschieben oder Verstellen von Optikelementen, womit die Fokusposition in z-Richtung verstellt wird, insbesondere durch Verschieben des Objektivs, Verschieben von bestimmten Linsen innerhalb des Objektivs oder Verstellen einer Zoomoptik. Zum Durchführen eines Höhenscans, während dem die vorgenannte Messkurve aufgenommen wird, wird mit der Fokusverstelleinrichtung die Fokusebene über einen z-Messbereich verstellt, während mit der Lichtmesseinrichtung zugehörige Lichtintensitäten gemessen werden.

Die Lichtmesseinrichtung ist dazu gestaltet, Lichtintensitäten zu messen, insbesondere von Licht im sichtbaren, Infrarot- und/oder UV-Bereich. Die Lichtmesseinrichtung kann eine ein- oder zwei-dimensionale Kamera umfassen oder auch nur ein oder mehrere separate Detektorelemente, beispielsweise Photomultiplier-Röhren.

Die Auswerteeinrichtung kann elektronische Komponenten umfassen, welche, insbesondere mit darauf gespeicherter Software, dazu eingerichtet sind, die zur Auswerteeinrichtung genannten Schritte auszuführen. Insofern kann die Auswerteeinrichtung auch eine Auswerte- und Steuereinrichtung darstellen. Sie kann durch einen Computer, beispielsweise einen Personalcomputer, ein Laptop oder ein Smartphone, gebildet sein, wobei von der Lichtmesseinrichtung Messdaten an den Computer übertragen werden und vorzugsweise der Computer funktionsmäßig mit übrigen elektronischen Komponenten oder Steuereinheiten des Konfokalmikroskops verbunden ist. Der Computer oder die Auswerteeinrichtung können auch räumlich getrennt von den übrigen Komponenten des Konfokalmikroskops angeordnet sein und beispielsweise über eine Kabel-, Internet- oder Funkverbindung in Kommunikation mit übrigen Komponenten des Konfokalmikroskops stehen.

Im Gegensatz zu chromatisch konfokalen Abstandsmessungen ist hat bei der Erfindung vorzugsweise das Abbildungssystem keine chromatische Längsaberration. Im Unterschied zu spektrometrischen Messverfahren wird zudem jede Messkurve vorzugsweise monochromatisch und nicht mit Weißlicht aufgenommen.

Für eine besonders schnelle Probenuntersuchung, bei welcher mehrere Messkurven mit unterschiedlicher Beleuchtungslichtwellenlänge aufgenommen werden, kann aber auch Weißlicht oder mehrere verschiedene Wellenlängen gleichzeitig auf die Probe gestrahlt werden; mit einem Farbteiler wird das von der Probe kommende Licht in mehrere verschiedene Detektionskanäle geleitet oder mit einem farbauflösenden Detektor/Kamera gemessen. Dadurch können mehrere Messkurven, die sich in der Beleuchtungswellenlänge unterscheiden, gleichzeitig aufgenommen werden.

Die Messung und auch die Funktionsanpassung können polarisationsabhängig erfolgen.

Durch die bestimmungsgemäße Verwendung der Merkmale des Konfokalmikroskops, die als fakultative Eigenschaften beschrieben sind, ergeben sich auch Varianten des erfindungsgemäßen Verfahrens.

Weitere Vorteile und Merkmale der Erfindung werden nachstehend mit Bezug auf die beigefügten schematischen Figuren beschrieben. Hierin zeigen:

Fig. 1    eine schematische Darstellung eines beispielhaften erfindungsgemäßen Konfokalmikroskops;

Fig. 2    eine schematische Ansicht eines Lichtstrahlengangs durch eine zu untersuchende Probenschicht;

Fig. 3    eine Messkurve, welche die Lichtintensität abhängig von der Fokushöhe wiedergibt, bei einer dicken Schicht;

Fig. 4    eine Messkurve, welche die Lichtintensität abhängig von der Fokushöhe wiedergibt, bei einer dünnen Schicht;

Fig. 5    eine Veranschaulichung des Zusammenhangs zwischen dem Abstand zweier Intensitätsbanden-Positionen der Messkurve aus Fig. 4 und der tatsächlichen Schichtdicke;

Fig. 6    einen Graphen des Abstands zweier Intensitätsbanden-Positionen der Messkurve aus Fig. 4 in Abhängigkeit von der Wellenlänge des Beleuchtungslichts;

Fig. 7    einen Graphen des Abstands zweier Intensitätsbanden-Positionen in Abhängigkeit von der Beleuchtungswellenlänge bei kleinem Pinhole-Durchmesser;

Fig. 8    einen Graphen des Abstands zweier Intensitätsbanden-Positionen in Abhängigkeit von der Beleuchtungswellenlänge bei einem Pinhole-Durchmesser, der größer ist als bei Fig. 7;

Fig. 9    einen Graphen des Abstands zweier Intensitätsbanden-Positionen in Abhängigkeit von der Beleuchtungswellenlänge bei einem Pinhole-Durchmesser, der größer ist als bei Fig. 8.

Gleiche und gleich wirkende Bestandteile sind in den Figuren in der Regel mit denselben Bezugszeichen gekennzeichnet.

Fig. 1 zeigt eine schematische Perspektivdarstellung eines Ausführungsbeispiels eines erfindungsgemäßen Konfokalmikroskops 100, mit dem eine Schichtdicke einer Probe 20 ermittelt werden soll.

Das Konfokalmikroskop 100 umfasst eine Lichtquelle 10, beispielsweise einen oder mehrere Laser, Dioden oder eine Weißlichtquelle. Es können nicht dargestellte Filter zum Auswählen einer bestimmten Beleuchtungswellenlänge vorhanden sein. Insbesondere kann das Konfokalmikroskop 100 als Laser-Scanning-Mikroskop gebildet sein.

Beleuchtungslicht der Lichtquelle 10 wird über Optikelemente 17, 18, insbesondere ein Objektiv 18, zur Probe 20 geleitet. Von der Probe 20 kommendes Licht, nachstehend als Probenlicht bezeichnet, wird mit einer Lichtmesseinrichtung 30 nachgewiesen. Das Probenlicht verläuft beim dargestellten Beispiel ebenfalls über das Objektiv 18 und weitere Optikelemente 17. Vom Beleuchtungslicht wird es durch einen Strahlteiler 14 getrennt, so dass zur Lichtmesseinrichtung 30 allein Probenlicht und kein Beleuchtungslicht geleitet wird. Der Strahlteiler 14 kann ein teildurchlässiger Spiegel sein, der insbesondere wellenlängenabhängig oder polarisationsabhängig Licht entweder transmittiert oder reflektiert. Bei dem Probenlicht kann es sich insbesondere um Beleuchtungslicht handeln, das an der Probe reflektiert/gestreut wird, oder um Licht, das von der Probe durch Fluoreszenz oder Phosphoreszenz abgestrahlt wird.

Alternativ zum dargestellten Beispiel, bei dem an der Probe zurückgeworfenes oder zurückgestrahltes Licht gemessen wird, kann auch in Transmission gemessen werden, so dass zwei Objektive auf gegenüberliegenden Seiten der Probe 20 angeordnet sind.

Zudem ist eine Fokusverstelleinrichtung 19 vorhanden, mit welcher ein Fokus des Beleuchtungslichts entlang der optischen Achse 16, also in Höhenrichtung / z-Richtung / Lichtpropagationsrichtung, verstellt wird. Zusätzlich zur Fokusverstelleinrichtung 19 kann auch eine nicht dargestellte Scaneinrichtung für eine laterale Probenabtastung vorhanden sein, also für eine Abtastung senkrecht zur optischen Achse 16.

Für eine möglichst hohe Messauflösung in z-Richtung wird eine Konfokalabbildung erzeugt. Dazu kann eine Lochblende / Pinhole 15 in einer zur Probenebene konjugierten Ebene angeordnet sein. Dadurch wird im Wesentlichen nur Probenlicht aus der Fokusebene durch die Lochblende 15 gelassen, während Probenlicht aus anderen Höhenebenen weitgehend ausgeblendet wird.

Um eine Schichtdicke der Probe 20 zu ermitteln, wird mit der Lichtmesseinrichtung 30 Probenlicht gemessen, während mit der Fokusverstelleinrichtung 19 der Beleuchtungsfokus in Höhenrichtung verstellt wird. Die hierbei aufgenommenen Messdaten werden mit einer Auswerteeinrichtung 35 ausgewertet. Dies wird später näher beschrieben.

Fig. 2 zeigt schematisch, wie Beleuchtungslicht 11 an einer zu untersuchenden Probe 20 zurückgeworfen wird. Die Probe 20 umfasst eine Schicht 23, deren Schichtdicke gemessen werden soll. Die Schicht 23 hat eine Oberkante oder Oberseite 21, welche eine Begrenzung zwischen der Schicht 23 und einem angrenzenden Medium, beispielsweise Luft, darstellt. Die Schicht 23 wird zudem durch eine Unterkante oder Unterseite 22 begrenzt, an welcher die Schicht 23 an ein anderes Material angrenzt, beispielsweise an einen Träger 24. Eine Brechzahl des Materials der Schicht 23 unterscheidet sich von den Brechzahlen der angrenzenden Materialien. Dadurch wird ein Teil des Beleuchtungslichts 11 an der Oberseite 21 reflektiert; dieses zurückgeworfene Licht ist in Fig. 2 mit dem Bezugszeichen 12 gekennzeichnet. Ein anderer Teil des Beleuchtungslichts 11 wird an der Oberseite 21 gebrochen, durchläuft die Schicht 23, wird an der Unterseite 22 reflektiert und verlässt die Probe 20 als Lichtanteil 13. Die Lichtanteile 12 und 13 können miteinander auf der Lichtmesseinrichtung interferieren. In Fig. 2 ist zudem rein schematisch die Begrenzung des Pinholes 15 dargestellt. Das Pinhole 15 begrenzt einen Bereich, aus dem Probenlicht zur Lichtmesseinrichtung gelangen kann, in lateraler Richtung (x-Richtung in Fig. 2) und in der Höhenrichtung (z-Richtung). In der Probenschicht 23 kann es zu Mehrfachreflexionen kommen, wobei das Pinhole 15 je nach Pinhole-Größe mehrfach-reflektiertes Probenlicht blockieren kann, wie in Fig. 2 schematisch illustriert.

Während Fig. 2 die Variante zeigt, dass zurückgeworfenes Licht 12, 13 gemessen wird, kann alternativ auch Licht gemessen werden, welches durch die Probe 20 verläuft und durch das untere Trägermaterial 24 läuft. In diesem Fall treten ebenfalls Interferenzen im nachgewiesenen Licht auf, nämlich zwischen Lichtanteilen, die an der Ober- und Unterseite 21 und 22 jeweils gebrochen und nicht reflektiert wurden, und Lichtanteilen, die zunächst an der Oberseite 21 gebrochen und sodann an der Unterseite 22 reflektiert und darauf an der Oberseite 21 nochmals reflektiert werden.

Um eine Schichtdicke zu bestimmen, wird durch die Fokusverstelleinrichtung Beleuchtungslicht 11 nacheinander auf verschiedene Höhenebenen fokussiert. Stimmt die Fokusebene des Beleuchtungslichts mit der Oberkante 21 oder Unterkante 22 überein, ist die gemessene Intensität des Probenlichts besonders groß, so dass aus einer Messkurve, welche die gemessene Lichtintensität abhängig von der z-Fokusposition des Beleuchtungslichts angibt, der Abstand zwischen Oberkante 21 und Unterkante 22 abgelesen und Wert für die Schichtdicke angenommen werden kann.

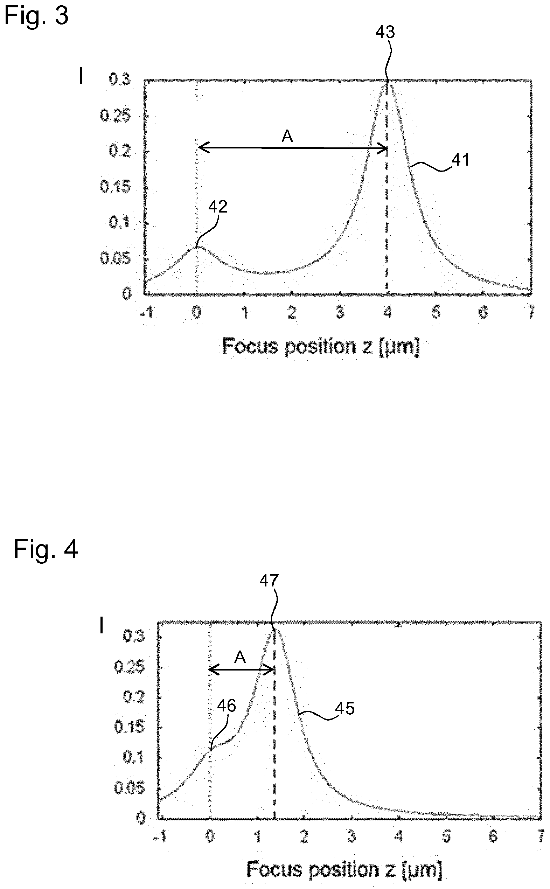

Fig. 3 zeigt eine solche Messkurve 41, welche die gemessene Lichtintensität (oder eine hierzu linear abhängige Größe, etwa einen Reflexionskoeffizienten) abhängig von der z-Fokusposition angibt. Es sei angemerkt, dass diese Messkurve und auch die später gezeigten Daten meist simulierte Daten sind, die der Veranschaulichung dienen. Die Messkurve 41 zeigt zwei Intensitätsbanden oder -maxima. Die erste Intensitätsbanden-Position 42 entspricht der z-Fokusposition, bei welcher auf die Oberseite 21 aus Fig. 2 fokussiert wird. Die zweite Intensitätsbanden-Position 43 entspricht der z-Fokusposition, bei welcher auf die Unterseite 22 aus Fig. 2 fokussiert wird. Weil bei einer Verstellung der Fokusverstelleinrichtung bekannt ist, wie stark die z-Fokusposition geändert wird, kann ein Abstand A zwischen den beiden Intensitätsbanden-Position 42 und 43 ermittelt werden. In Fig. 3 beträgt dieser Abstand $4\mu m$ und stimmt auch mit der tatsächlichen Schichtdicke von $4\mu m$ überein.

Prinzipiell kann als eine Intensitätsbanden-Position 42 oder 43 diejenige z-Fokusposition verwendet werden, bei welcher eine Intensitätsbande einen Maximalwert hat. Üblicherweise wird aber eine Intensitätsbanden-Position 42 oder 43 bestimmt, indem ein Mittelwert oder geometrischer Schwerpunkt aus denjenigen z-Fokuspositionen gebildet wird, welche innerhalb einer Halbwertsbreite einer Intensitätsbande liegen, das heißt innerhalb eines Intervalls an z-Fokuspositionen, wobei an den Intervallgrenzen die Lichtintensität halb so hoch ist wie der Maximalwert der Intensitätsbande.

Eine weitere beispielhafte Messkurve 45 ist in Fig. 4 gezeigt. In diesem Fall ist die untersuchte Schicht dünner, nämlich bloß $1,4\mu m$ dick. Als Folge überlappen die beiden Intensitätsbanden der Messkurve 45 stark. Die beiden ermittelten Intensitätsbanden-Positionen 46 und 47 haben hier jedoch nicht einen Abstand A von exakt $1,4\mu m$. Vielmehr kommt es bei überlappenden Intensitätsbanden zu Verschiebungen der ermittelbaren Intensitätsbanden-Positionen 46 und 47, so dass ihr Abstand A nicht exakt der Schichtdicke entspricht. Herkömmlicherweise werden daher Konfokalmikroskope nur für Schichtdickenmessungen an dicken Schichten, wie in Fig. 3 gezeigt, genutzt und nicht für Schichtdickenmessungen an Dünnschichten wie in Fig. 4. Bei der Erfindung wird hingegen ein mathematisches Modell verwendet, welches auch für Dünnschichten wie in Fig. 4 eine präzise Schichtdickenbestimmung ermöglicht.

Als Dünnschicht kann eine Schicht angesehen werden, wenn ihre Dicke so klein ist, dass in einer Messkurve 45 nur ein einziges Maximum, und nicht etwa zwei lokale Maxima, sichtbar sind. Demnach hängt eine Einteilung in Dünnschichten nicht nur von der absoluten Dicke ab, sondern auch vom Messsystem.

Ein Grund für die Verschiebungen der ermittelbaren Intensitätsbanden-Positionen 46 und 47 liegt darin, dass durch die Überlappung zweier Intensitätsbanden ein Bandenmaximum der ersten Intensitätsbande durch Intensitätsanteile, die auf die zweite Bande zurückgehen, verschoben wird. Gleiches gilt, wenn statt dem Bandenmaximum der vorgenannte geometrische Schwerpunkt ermittelt wird.

Ein weiterer Grund für die Verschiebungen der ermittelbaren Intensitätsbanden-Positionen 46 und 47 liegt in der Interferenz zwischen Lichtanteilen, die an der Oberseite und Unterseite der Schicht reflektiert werden. Wird Beleuchtungslicht auf die Oberseite fokussiert, so wird nicht nur von der Oberseite zurückgeworfenes Licht gemessen, sondern auch Licht, das an der Oberseite gebrochen und darauf an der Unterseite der Schicht reflektiert wird, wie zu Fig. 2 beschrieben. Dabei kann es zu positiver oder negativer Interferenz kommen. Abhängig davon kann ein Abstand A zweier Intensitätsbanden-Positionen entweder kleiner oder größer als eine tatsächliche Schichtdicke sein.

Die Erfindung nutzt ein mathematisches Modell, welches einen Zusammenhang zwischen dem ermittelbaren Abstand zweier Intensitätsbanden-Positionen und einer tatsächlichen Schichtdicke beschreibt. Im Modell wird die oben genannte Interferenz berücksichtigt, welche die Intensitätsbanden-Positionen beeinflusst. Die Interferenz hängt ab von der Wellenlänge des Beleuchtungslicht, welche als vorgegebener Parameter in das Modell eingeht. Zudem geht die numerische Apertur in das Modell ein sowie eine Größe des Pinholes. Wie in Fig. 2 illustriert, beeinflusst der Durchmesser des Pinholes 15, inwiefern mehrfachreflektiertes Beleuchtungslicht blockiert oder zur Lichtmesseinrichtung durchgelassen wird. Außerdem bestimmt der Durchmesser des Pinholes 15 auch, wie groß ein beleuchteter z-Fokus ist; so wird bei jeder beliebigen z-Fokusposition ein gewisser Lichtanteil an der Oberseite der Schicht reflektiert und durch das Pinhole durchgelassen und ein gewisser Lichtanteil, der an der Unterseite reflektiert wird, wird durch das Pinhole durchgelassen; wie groß diese gewissen Lichtanteile sind, hängt vom Durchmesser des Pinholes ab und wird im mathematischen Modell berücksichtigt. Die Größe des Pinholes kann in Airy-Einheiten angegeben werden. Dabei ist 1 Airy der Durchmesser eines Beugungsscheibchens, auf welches ein Probenpunkt mit dem Konfokalmikroskop abgebildet wird beziehungsweise auf weiche ein Lichtquellenpunkt in der Probenebene abgebildet wird.

In dem mathematischen Modell wird die gemessene Lichtintensität Int als Funktion der z-Fokusposition z als $Int[z]$ beschrieben, wobei $Int[z]$ von der Summe aus dem Reflexionskoeffizienten $ra_0[z, lambda]$ für eine Reflexion an der Oberseite und einem oder mehreren Reflexionskoeffizienten $ra_i[d, z, lambda]$ für eine Reflexion an der Unterseite oder für Mehrfachreflexionen abhängt. Die Reflexionskoeffizienten $ra_0$ und $ra_i$ hängen von der z-Fokusposition z sowie von der Lichtwellenlänge lambda ab. Die Reflexionskoeffizienten $ra_i$, zu denen Licht die Schicht durchläuft, hängen zudem von der tatsächlichen Schichtdicke d ab. Für einfache mathematische Modelle kann der Index i von $ra_i$ auf 1 oder 2 begrenzt sein, wobei $ra_1$ den Fall beschreibt, dass Beleuchtungslicht an der Unterseite 22 aus Fig. 2 reflektiert wird und sodann an der Oberseite 21 austritt, während $ra_2$ den Fall beschreibt, dass Beleuchtungslicht an der Unterseite 22 reflektiert, sodann an der Oberseite 21 reflektiert und nochmals an der Unterseite 22 reflektiert wird, ehe es aus der Oberseite 21 austritt. Die gemessene Lichtintensität $Int[z]$ hängt im Modell quadratisch von der Summe der Reflexionskoeffizienten ab, beispielsweise wie folgt, wobei Proportionalitätskonstanten ergänzt werden können:

$$Int[z] = (\, ra_0[z, lambda] + ra_i[d, z, lambda]\,)\,\char94 2.$$

Der Reflexionskoeffizient $ra_0[z, lambda]$ wird im mathematischen Modell durch eine Formel beschrieben, welche die Fokusausdehnung in z-Richtung und in lateraler Richtung berücksichtigt. Diese Fokusabmessungen hängen von der Wellenlänge, der numerischen Apertur und der Größe des Pinholes ab. Es wird ein kleinster Strahldurchmesser (Lateraldurchmesser) $w0[lambda]$ berücksichtigt, welcher genau im Fokus vorkommt. Dieser Strahldurchmesser $w0[lambda]$ wird im Modell mit steigender Wellenlänge lambda kleiner, mit steigender numerischen Apertur NA kleiner und mit steigender Größe des Pinholes AU größer. Beispielsweise kann im Modell angenommen werden:

$$w0[lambda] = AU\, /\, 4\, *\, lambda\, /\, NA$$

An anderen z-Positionen ist der Strahldurchmesser $w[z, lambda]$ größer, wobei das Modell eine Formel beinhaltet, welche den Strahldurchmesser $w[z, lambda]$ als Funktion von z beschreibt, durch $w0[lambda]$ und abhängig von lambda, AU und NA. Beispielsweise kann angenommen werden:

$$w[z, lambda] = w0[lambda] * sqrt (1 + ( z/\pi/(AU/4/NA)^2 / lambda )^2 )$$

wobei sqrt die Wurzel des darauffolgenden Ausdrucks bezeichnet.

Alle genannten Gleichungen können insbesondere dahingehend abgeändert werden, dass Proportionalitätsfaktoren oder Konstanten ergänzt werden.

Der Reflexionskoeffizient rao[z, lambda] kann nun umso größer sein, je kleiner der Strahldurchmesser an der betrachteten z-Position ist. Dies berücksichtigt, dass bei einem großen Strahldurchmesser ein großer Anteil an reflektiertem Licht vom Pinhole blockiert wird, während mit kleiner werdendem Strahldurchmesser ein steigender Anteil an zurückgeworfenem Licht das Pinhole passieren kann. Dies kann mathematisch dadurch ausgedrückt werden, dass rao[z, lambda] proportional ist zu oder abhängt von: w0[lambda] / w[z, lambda].

So wird rao[z, lambda] im Modell beschrieben durch:

$$ra_0[z, lambda] = rt01[lambda] * w0[lambda] / w[z, lambda]$$

Hierbei ergibt sich der Koeffizient rt01[lambda] aus den fresnelschen Formeln, welche die Reflexion und Transmission einer Lichtwelle beschreiben.

In entsprechender Weise hängen auch die übrigen Reflexionskoeffizienten $ra_i$[d, z, lambda] vom Strahldurchmesser ab sowie von den entsprechenden Koeffizienten gemäß den fresnelschen Formeln, als:

$$ra_i[d, z, lambda] = w0[lambda] / w[z, lambda] * (1\text{-}rt01[lambda]^2 *$$
$$rt10[lambda]^{\wedge}(i\text{-}1) * rt12[lambda]^{\wedge}i * expterm$$

Hierbei beschreibt 1-rt01[lambda] den Lichtanteil, der an der Oberseite transmittiert und nicht reflektiert wird. Durch rt10[lambda] wird der Lichtanteil berücksichtigt, der an der Unterseite reflektiert wird und durch rt12[lambda] wird der Lichtanteil berücksichtigt, der von der Unterseite kommend an der Oberseite transmittiert wird. Der Ausdruck expterm beschreibt eine Welle, welche als Exponentialterm mit imaginären i dargestellt werden kann, wie aus den fresnelschen Formeln bekannt. Die übrigen i in obiger Gleichung geben den Index an, welcher die Anzahl betrachteter Reflexionen berücksichtigt, und können beispielsweise den Wert 2 zugewiesen bekommen.

Sind die Beleuchtungswellenlänge lambda, die numerische Apertur NA und die Pinhole-Größe AU bekannt, so können w0[lambda] und w[z, lambda] und damit auch rao und $ra_i$ berechnet werden, womit schließlich die messbare Intensität Int[z] berechnet werden kann. Die Daten aus den Figuren 3 und 4 sind in dieser Weise simuliert, wobei im Modell NA = 0,6 und lambda = 405nm sowie die jeweiligen Schichtdicken von d=4$\mu$m bei Fig. 3 und d=14$\mu$m bei Fig. 4 vorgegeben wurden. Sind die numerische Apertur NA und/oder der Pinhole-Durchmesser AU unbekannt, können diese aber auch zusammen mit der Schichtdicke d mit Hilfe des mathematischen Modells aus den Messdaten ermittelt werden.

Idealerweise sollte ein bestimmter Abstand A zwischen den Intensitätsbanden-Positionen überlappender Intensitätsbanden eindeutig einer Schichtdicke zugeordnet werden können. Dies ist jedoch nicht immer der Fall. Fig. 5 zeigt einen Graphen, in dem der ermittelbare Abstand A zwischen zwei Intensitätsbanden-Positionen als Funktion A(d) der tatsächlichen Schichtdicke d aufgetragen ist. Zum Vergleich wird in Fig. 5 auch eine Gerade g(d) = d dargestellt, welche gleich der tatsächlichen Schichtdicke d ist. Wird aus Messdaten ein bestimmter Wert für den Abstand A zweier Intensitätsbanden-Positionen ermittelt, beispielsweise A = 1,5 $\mu$m, so kann dieser Wert nicht eindeutig einer bestimmten tatsächlichen Schichtdicke d zugeordnet werden, sondern kann für A = 1,5 $\mu$m den Schichtdicken d = 1,4$\mu$m oder d = 1,45$\mu$m oder d = 1,57$\mu$m entsprechen.

Die Abhängigkeit des Abstands A von der tatsächlichen Schichtdicke d hängt insbesondere davon ab, wie die Intensitätsbanden-Positionen ermittelt werden. Für die Funktion A wurden die Positionen durch die Berechnung des geometrischen Schwerpunkts einer Intensitätsbande ermittelt, wie oben näher erläutert. Zum Vergleich ist in Fig. 5 eine weitere Kurve A2 dargestellt, welche den Abstand zweier Intensitätsbanden-Positionen angibt, wenn diese Positionen den Maximalwert der Intensitätsbanden angeben, wie ebenfalls detaillierter oben beschrieben. Es ist in Fig. 5 erkennbar, dass auch für A2 ein bestimmter Wert nicht eindeutig einer tatsächlichen Schichtdicke d zugeordnet werden kann, wobei der Verlauf von A2(d) sich deutlich von A(d) unterscheidet.

Diese Mehrdeutigkeiten können vermieden werden, wenn zusätzliche Annahmen im mathematischen Modell getroffen werden. Beispielsweise kann eine Spanne erlaubter Werte für die Schichtdicke d vorgegeben sein, so dass die Zuordnung eines Werts von A zu genau einem Wert von d möglich wird.

Alternativ können aber auch zusätzliche Messungen durchgeführt werden, so dass die Mehrdeutigkeit vermieden werden kann. Dazu werden mindestens zwei Messkurven, vorzugsweise mehr als zwei Messkurven, aufgenommen, bei denen jeweils zu demselben Probenpunkt (das heißt zu einem bestimmten Punkt in einer Lateralebene / xy-Ebene) mit der Fokusverstelleinrichtung verschiedene z-Fokuspositionen eingestellt werden, wie zu den Figuren 3 und 4 erläutert. Die mehreren Messkurven unterscheiden sich in einem Parameter der Messung, beispielsweise in der Wellenlänge des Beleuchtungslichts. Aus jeder Messkurve kann nun ein Abstand A der zwei Intensitätsbanden-Positionen bestimmt werden. Weil die Verschiebung der ermittelbaren Intensitätsbanden-Positionen von der Wellenlänge abhängt (wie oben näher veranschaulicht), werden für eine bestimmte Schichtdicke d wellenlängenabhängig verschiedene Abstandswerte A ermittelt. Dies ist in Fig. 6 dargestellt, welche die ermittelbaren Abstände als Funktion der Wellenlänge des Beleuchtungslichts zeigt.

Fig. 6 zeigt experimentelle Daten m, welche den ermittelten Abstand zweier Intensitätsbanden-Positionen für verschiedene Beleuchtungswellenlängen angeben. Zudem sind zwei Fitfunktionen an diese experimentellen Daten gezeigt, wozu das mathematische Modell verwendet wurde. Die erste Fitfunktion A(lambda) beschreibt den Abstand A zweier Intensitätsbanden-Positionen für verschiedene Beleuchtungswellenlängen lambda, wenn die Intensitätsbanden-Positionen über die geometrischen Schwerpunkte der Intensitätsbanden berechnet werden. Die andere Fitfunktion A2(lambda) beschreibt den Abstand A zweier Intensitätsbanden-Positionen für verschiedene Beleuchtungswellenlängen lambda, wenn die Intensitätsbanden-Positionen als Ortswerte zu den jeweiligen Maximalwerten der Intensitätsbanden bestimmt werden.

In dem dargestellten Beispiel liefert die Funktionsanpassung von A(lambda) als Ergebnisse eine Schichtdicke d von 1,44μm +/- 0,045μm und eine numerische Apertur von NA=0,4. Diese berechnete Schichtdicke ist größer als jeder einzelne der in diesem Beispiel gegebenen experimentell erfassten Abstände der Intensitätsbanden-Positionen, womit die Relevanz des erfindungsgemäßen Vorgehens unterstrichen wird.

Anstelle oder zusätzlich zur Änderung der Beleuchtungswellenlänge kann auch ein anderer Messparameter verändert werden, wobei für jede Einstellung des Messparameters jeweils eine Messkurve aufgenommen wird. So kann auch die numerische Apertur oder eine Einstellung, das heißt Größe, Form oder Position, des Pinholes variiert werden und es wird jeweils eine Messkurve aufgenommen.

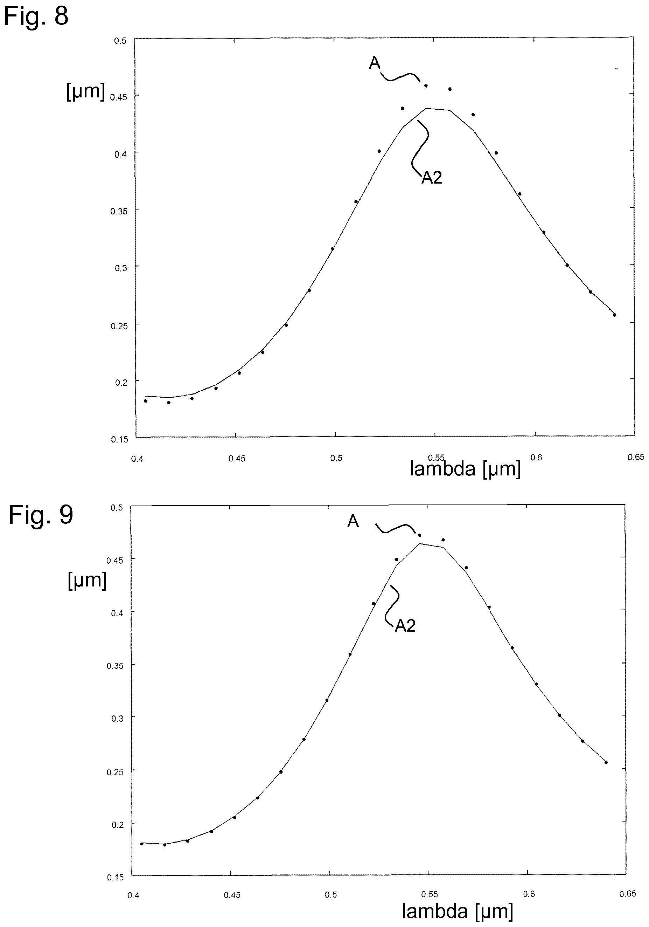

In den Figuren 7 bis 9 werden durch das mathematische Modell simulierte Daten gezeigt, bei denen der ermittelbare Abstand A zwischen zwei Intensitätsbanden-Positionen als Funktion der Wellenlänge lambda gezeigt ist, ähnlich wie Fig. 6. Die Werte für den Abstand A wurden ermittelt, indem die Intensitätsbanden-Positionen über eine geometrische Mittelwertbildung ermittelt wurden. Hingegen sind die ebenfalls dargestellten Werte des Abstands A2 zwischen den Intensitätsbanden-Positionen ermittelt, indem die Positionen der Maximalwerte der Intensitätsbanden bestimmt wurden. Die Figuren 7 bis 9 sind jeweils für dieselbe Schichtdicke von d=273nm simuliert und unterscheiden sich in der Größe AU des Pinholes der konfokalen Abbildung. Bei Fig. 7 gilt AU=1,5, das heißt der Durchmesser des Pinholes beträgt 1,5 Airy Units. Hingegen gilt bei Fig. 8: AU=2,5 und bei Fig. 9: AU=3,5. Es ist erkennbar, dass sich die Werte von A oder A2 für eine bestimmte Beleuchtungswellenlänge deutlich unterscheiden, wenn unterschiedliche Pinhole-Durchmesser genutzt werden. Daher kann zusätzlich oder alternativ zum Variieren der Beleuchtungswellenlänge beim Aufnehmen mehrerer Messkurven auch eine Pinhole-Einstellung geändert werden. Die Figuren verdeutlichen die Bedeutung des mathematischen Modells, um aus dem Abstand zweier Intensitätsbanden-Positionen auf eine Schichtdicke zu schließen.

Gerade bei Dünnschichten kann erst durch Berücksichtigen, wie der Abstand zweier überlappender Intensitätsbanden von der Schichtdicke und fakultativ weiteren Größen abhängt, eine präzise Aussage über die Schichtdicke getroffen werden.

Durch die Erfindung wird daher die Schichtdickenbestimmung bei dünnen Schichten durch die Konfokalmikroskopie ermöglicht, welche bisher entweder auf die Untersuchung dickerer Schichten beschränkt war oder nur mit aufwändigen zusätzlichen apparativen Maßnahmen zur Untersuchung dünner Schichten genutzt wurde.

Bezugszeichenliste

| 10 | Lichtquelle |
| 11 | Beleuchtungslicht |
| 12 | Lichtanteil, der an einer Oberseite einer zu untersuchenden Schicht zurückgeworfen wird |
| 13 | Lichtanteil, der eine zu untersuchende Schicht durchläuft und an einer Unterseite der Schicht zurückgeworfen wird |
| 14 | Strahlteiler |
| 15 | Lochblende für eine konfokale Abbildung |
| 16 | optische Achse |
| 17 | Optikelement(e) |

18          Optikelement / Objektiv
19          Fokusverstelleinrichtung
20          Probe
21          Oberseite der Schicht
22          Unterseite der Schicht
23          Schicht
24          Träger
30          Lichtmesseinrichtung
35          Auswerteeinrichtung
41          Messkurve, welche die Lichtintensität abhängig von der z-Fokusposition angibt
42          erste Intensitätsbanden-Position
43          zweite Intensitätsbanden-Position
45          Messkurve, welche die Lichtintensität abhängig von der z-Fokusposition angibt
46, 47      Intensitätsbanden-Positionen
100         Konfokalmikroskop
d           Schichtdicke
m           experimentelle Daten, welche den ermittelten Abstand zweier Intensitätsbanden-Positionen für verschiedene Beleuchtungswellenlängen angeben
A, A(d)     Abstand/Positionsdifferenz zweier Intensitätsbanden-Positionen
A2, A2(d)   Abstand/Positionsdifferenz zweier Intensitätsbanden-Positionen


**Patentansprüche**

**1.** Konfokalmikroskop zur Schichtdickenmessung, umfassend:

- Optikelemente (17, 18) zum Leiten und Fokussieren von Beleuchtungslicht (11) auf eine Probe (20);
- eine Fokusverstelleinrichtung (19), welche dazu eingerichtet ist, entlang einer optischen Achse (16) des Konfokalmikroskops eine Relativverstellung zwischen einer Fokusposition des Beleuchtungslichts (11) und einer Probenposition vorzunehmen;
- eine Lichtmesseinrichtung (30), welche angeordnet ist zum konfokalen Messen von Beleuchtungslicht (11), welches von der Probe (20) kommt, wobei mit der Lichtmesseinrichtung (30) Messsignale zu unterschiedlichen Einstellungen der Fokusverstelleinrichtung (19) aufnehmbar sind;
- eine Auswerte- und Steuereinrichtung (35) zum Bestimmen einer Schichtdicke d

der Probe (20), wozu die Auswerte- und Steuereinrichtung (35) dazu eingerichtet ist, aus einer von der Lichtmesseinrichtung (30) aufgenommenen Messkurve (41, 45), welche eine gemessene Lichtintensität Int[z] in Abhängigkeit der Fokusposition angibt, Intensitätsbanden-Positionen (46, 47) von zumindest zwei Intensitätsbanden zu bestimmen und auf Basis einer Positionsdifferenz (A) zwischen den Intensitätsbanden-Positionen (46, 47) auf eine Schichtdicke d zu schließen;
**dadurch gekennzeichnet,**
**dass** die Auswerte- und Steuereinrichtung (35) dazu eingerichtet ist, auf die Schichtdicke d mit Hilfe eines mathematischen Modells zu schließen, welches für überlappende Intensitätsbanden eine Abhängigkeit der Intensitätsbanden-Positionen (46, 47) von zumindest einer Lichtwellenlänge lambda und der Schichtdicke d unter Berücksichtigung von Interferenz des Beleuchtungslichts (11) an der Schicht beschreibt, indem das mathematische Modell die gemessene Lichtintensität Int[z] durch Int[z]= (rao[z, lambda] + ra$_i$[d, z, lambda])^2 und somit als abhängig von einer Summe aus einem Reflexionskoeffizienten rao[z, lambda] für eine Reflexion an einer Schichtoberseite (21) und einem oder mehreren Reflexionskoeffizienten ra$_i$[d, z, lambda] für eine Reflexion an einer Schichtunterseite (22) oder für Mehrfachreflexionen beschreibt, wobei durch "i" die Anzahl betrachteter Reflexionen angegeben wird,
wobei eine Auswirkung auf die gemessene Lichtintensität Int[z] durch Interferenz, welche durch Lichtreflexion an der Schichtoberseite (21) und der Schichtunterseite (22) entsteht, durch die Reflexionskoeffizienten rao[z, lambda], ra$_i$[d, z, lambda] in das mathematische Modell eingeht, wobei die Reflexionskoeffizienten rao[z, lambda], ra$_i$[d, z, lambda] durch eine Formel ausgedrückt werden, welche eine laterale Ausdehnung eines Strahldurchmessers w[z, lambda] für verschiedene Positionen in einer Höhenrichtung z abhängig von zumindest der Lichtwellenlänge lambda, einer numerischen Apertur NA und einer Pinhole-Größe AU wie folgt beschreibt:

$$ra_0[z, \text{lambda}] = rt01[\text{lambda}] * w0[\text{lambda}] / w[z, \text{lambda}];$$

$$ra_i[d, z, \text{lambda}] = w0[\text{lambda}] / w[z, \text{lambda}] * (1-rt01[\text{lambda}]^2) *$$

$$rt10[\text{lambda}]^{\wedge}(i-1) * rt12[\text{lambda}]^{\wedge}i * \text{expterm};$$

wobei w0[lambda] einen kleinsten lateralen Strahldurchmesser angibt, welcher genau im Fokus vorkommt, und im mathematischen Modell aus der Wellenlänge lambda, der numerischen Apertur NA und der Größe des Pinholes AU bestimmt wird,

wobei der Strahldurchmesser w[z, lambda] als Funktion von z und durch w0[lambda] und abhängig von lambda, AU und NA beschrieben wird; wobei 1-rt01[lambda] einen Lichtanteil beschreibt, der an der Schichtoberseite (21) transmittiert und nicht reflektiert wird,

wobei rt10[lambda] einen Lichtanteil berücksichtigt, der an der Schichtunterseite (22) reflektiert wird,

wobei rt12[lambda] einen Lichtanteil berücksichtigt, der von der Schichtunterseite (22) kommend an der Schichtoberseite (21) transmittiert wird,

wobei expterm eine Welle, dargestellt als Exponentialterm mit imaginärem i, beschreibt.

2. Konfokalmikroskop nach Anspruch 1,
   **dadurch gekennzeichnet,**
   **dass** die Auswerte- und Steuereinrichtung (35) dazu eingerichtet ist, aus einer aufgenommenen Messkurve (45), welche eine gemessene Lichtintensität in Abhängigkeit der Fokusposition angibt, zu mehreren Intensitätsbanden jeweils eine Intensitätsbanden-Position (46, 47) zu bestimmen, indem aus allen Daten innerhalb einer Halbwertsbreite der jeweiligen Intensitätsbande ein geometrischer Schwerpunkt berechnet wird.

3. Konfokalmikroskop nach Anspruch 1 oder 2,
   **dadurch gekennzeichnet,**
   **dass** in dem mathematischen Modell die Intensitätsbanden-Positionen (46, 47) abhängig sind von Brechzahlen von einem Material einer zu untersuchenden Schicht (23) sowie von daran angrenzenden Materialien.

4. Konfokalmikroskop nach einem der Ansprüche 1 bis 3,
   **dadurch gekennzeichnet,**
   **dass** die Auswerte- und Steuereinrichtung (35) dazu eingerichtet ist, zum eindeutigen Zuordnen der Positionsdifferenz (A) zweier Intensitätsbanden-Positionen (46, 47) zu einer Schichtdicke d, mehrere Messkurven (45) mit Beleuchtungslicht (11) unterschiedlicher Wellenlängen mit der Lichtmesseinrichtung (30) aufzunehmen, und aus jeder Messkurve (45) eine jeweilige Positionsdifferenz (A) zweier Intensitätsbanden-Positionen (46, 47) zu bestimmen.

5. Konfokalmikroskop nach einem der Ansprüche 1-4,
   **dadurch gekennzeichnet,**
   **dass** in dem mathematischen Modell für die axiale z-Abhängigkeit des Strahldurchmessers das Profil eines Gauß-Strahls angenommen ist, welches beschrieben wird durch:

$$w[z, \text{lambda}] = w0[\text{lambda}] * \text{sqrt} (1 + ( z/\pi/(AU/4/NA)^2 / \text{lambda} )^2 ).$$

wobei sqrt die Wurzel des darauffolgenden Ausdrucks bezeichnet.

6. Konfokalmikroskop nach einem der Ansprüche 1 bis 5,

   **dadurch gekennzeichnet,**
   **dass** die Auswerte- und Steuereinrichtung (35) dazu eingerichtet ist, zum eindeutigen Zuordnen der Positionsdifferenz (A) zweier Intensitätsbanden-Positionen (46, 47) zu einer Schichtdicke d:

   - unterschiedliche Pinhole-Einstellungen AU eines Pinholes (15) einer Konfokalabbildung auf die Lichtmesseinrichtung (30) vorzunehmen,
   - für jede Pinhole-Einstellung AU jeweils eine Messkurve (45) mit der Lichtmesseinrichtung (30) aufzunehmen,
- wobei das mathematische Modell eine Abhängigkeit einer Positionsdifferenz (A) zweier Intensitätsbanden-Positionen (46, 47) von einer Pinhole-Einstellung AU beschreibt, womit durch Kenntnis der unterschiedlichen Pinhole-Einstellungen AU Mehrdeutigkeiten im Zuordnen von Positionsdifferenzen (A) zweier Intensitätsbanden-Positionen (46, 47) zu einer Schichtdicke d ausgeräumt werden,

**dass** aus den verschiedenen Messkurven (45) jeweils eine Positionsdifferenz (A) zweier Intensitätsbanden-Positionen (46, 47) ermittelt wird,
**dass** mittels des mathematischen Modells eine Fitfunktion, welche Positionsdifferenzen (A) zweier Intensitätsbanden-Positionen (46, 47) in Abhängigkeit der Pinhole-Einstellung AU beschreibt, an die bei verschiedenen Pinhole-Einstellungen AU ermittelten Positionsdifferenzen (A) angepasst wird.

7. Konfokalmikroskop nach Anspruch 6,
**dadurch gekennzeichnet,**
**dass** die Auswerte- und Steuereinrichtung (35) dazu eingerichtet ist, die unterschiedlichen Einstellungen AU des Pinholes (15), durch welche die verschiedenen Messkurven (45) aufgenommen werden, zu erzeugen durch:

- eine Größenverstellung des Pinholes (15) zwischen Messungen verschiedener Messkurven (45),
- eine Lateralverschiebung des Pinholes (15) zwischen Messungen verschiedener Messkurven (45), oder

**dass** ein Strahlengang des von der Probe (20) kommenden Lichts auf verschiedene Strahlengänge aufgespalten ist, in denen unterschiedliche Pinholes angeordnet sind.

8. Konfokalmikroskop nach Anspruch 6 oder 7,

**dadurch gekennzeichnet,**
**dass** zum Durchführen eines Airyscans in einer Zwischenbild- oder Bildebene mehrere voneinander lateral getrennte Messwege gebildet sind,
wobei die lateral getrennten Messwege in der Zwischenbild- oder Bildebene insbesondere gebildet sind durch lateral zueinander versetzte optische Fasern, welche jeweils zu einem Lichtdetektor der Lichtmesseinrichtung (30) führen, oder durch mehrere lateral versetzte Sub-Airy-Detektorelemente,
wobei ein Lateralabstand zwischen den lateral getrennten Messwegen kleiner ist als eine Beugungsscheibe, als welche ein Punkt einer Probenebene auf die Messwege abgebildet wird,
**dass** die unterschiedlichen Einstellungen des Pinholes (15), durch welche die verschiedenen Messkurven (45) aufgenommen werden, gebildet sind durch die lateral getrennten Messwege.

9. Konfokalmikroskop nach einem der Ansprüche 1 bis 8,
**dadurch gekennzeichnet,**
**dass** die Auswerte- und Steuereinrichtung (35) dazu eingerichtet ist, durch verwendete Komponenten (15, 17, 18) des Konfokalmikroskops bedingte Parameter des mathematischen Modells, welche zumindest die numerische Apertur umfassen, vorab durch eine Referenzmessung zu bestimmen.

10. Konfokalmikroskop nach einem der Ansprüche 1 bis 9,
**dadurch gekennzeichnet,**
**dass** die Auswerte- und Steuereinrichtung (35) dazu eingerichtet ist, zum Überprüfen, ob ein Ein-Schicht-System und kein Null-Schicht-System vorliegt:

- eine Ein-Schicht-Funktionsanpassung durchzuführen, bei welcher die Messkurve (45) mit zwei Intensitätsbanden beschrieben wird,
- eine Null-Schicht-Funktionsanpassung durchzuführen, bei welcher die Messkurve (45) mit einer einzigen Intensitätsbande beschrieben wird, und
- ein Ein-Schicht-System anzunehmen, wenn ein Funktionsanpassungsergebnis mit der Ein-Schicht-Funktionsanpassung eine höhere Güte hat als ein Funktionsanpassungsergebnis mit der Null-Schicht-Funktionsanpassung.

11. Konfokalmikroskop nach einem der Ansprüche 1 bis 10,
**dadurch gekennzeichnet,**
**dass** die Auswerte- und Steuereinrichtung (35) dazu eingerichtet ist, zum eindeutigen Zuordnen der Positionsdifferenz (A) zweier Intensitätsbanden-Positionen (46, 47) zu einer Schichtdicke d:

- unterschiedliche numerische Aperturen NA einzustellen und
- für jede eingestellte numerische Apertur NA jeweils eine Messkurve (45) mit der Lichtmesseinrichtung (30) aufzunehmen,
- wobei das mathematische Modell eine Abhängigkeit einer Positionsdifferenz (A) zweier Intensitätsbanden-Positionen (46, 47) von der numerischen Apertur NA beschreibt, womit durch Kenntnis der eingestellten numerischen Aperturen NA Mehrdeutigkeiten im Zuordnen von Positionsdifferenzen (A) zweier Intensitätsbanden-Positionen (46, 47) zu einer Schichtdicke d vermieden werden.

12. Mikroskopieverfahren zur Schichtdickenmessung mit einem Konfokalmikroskop (100), umfassend:

- Leiten von Beleuchtungslicht (11) über Optikelemente (17, 18) auf eine Probe (20);
- Relativverstellen einer Fokusposition des Beleuchtungslichts (11) zu einer Probenposition entlang einer optischen Achse (16) des Konfokalmikroskops (100) mittels einer Fokusverstelleinrichtung (19);
- konfokales Messen von Beleuchtungslicht (11), welches von der Probe (20) kommt, mittels einer Lichtmesseinrichtung (30), wobei mit der Lichtmesseinrichtung (30) Messsignale zu unterschiedlichen Einstellungen der Fokusverstelleinrichtung (19) aufgenommen werden;
- Bestimmen einer Schichtdicke d der Probe (20) durch eine Auswerteeinrichtung (35), wozu die Auswerteeinrichtung (35) aus einer von der Lichtmesseinrichtung (30) aufgenommenen Messkurve (41, 45), welche eine gemessene Lichtintensität Int[z] in Abhängigkeit der Fokusposition angibt, Intensitätsbanden-Positionen (46, 47) von zumindest zwei Intensitätsbanden bestimmt und auf Basis einer Positionsdifferenz (A) zwischen den Intensitätsbanden-Positionen (46, 47) auf eine Schichtdicke d schließt,

**dadurch gekennzeichnet,**
**dass** die Auswerteeinrichtung (35) auf die Schichtdicke d mit Hilfe eines mathematischen Modells schließt, welches für überlappende Intensitätsbanden eine Abhängigkeit der Intensitätsbanden-Positionen (46, 47) von zumindest einer Lichtwellenlänge lambda und der Schichtdicke d unter Berücksichtigung von Interferenz des Beleuchtungslichts (11) an einer Schicht (23) der Probe (20) beschreibt, indem das mathematische Modell die gemessene Lichtintensität Int[z] durch Int[z]= $(ra_0[z, lambda] + ra_i[d, z, lambda])^2$ und somit als abhängig von einer

Summe aus einem Reflexionskoeffizienten rao[z, lambda] für eine Reflexion an einer Schichtoberseite (21) und einem oder mehreren Reflexionskoeffizienten $ra_i$[d, z, lambda] für eine Reflexion an einer Schichtunterseite (22) oder für Mehrfachreflexionen beschreibt, wobei durch "i" die Anzahl betrachteter Reflexionen angegeben wird,

wobei eine Auswirkung auf die gemessene Lichtintensität Int[z] durch Interferenz, welche durch Lichtreflexion an der Schichtoberseite (21) und der Schichtunterseite (22) entsteht, durch die Reflexionskoeffizienten rao[z, lambda], $ra_i$[d, z, lambda] in das mathematische Modell eingeht, wobei die Reflexionskoeffizienten rao[z, lambda], $ra_i$[d, z, lambda] durch eine Formel ausgedrückt werden, welche eine laterale Ausdehnung eines Strahldurchmessers w[z, lambda] für verschiedene Positionen in einer Höhenrichtung z abhängig von zumindest der Lichtwellenlänge lambda, einer numerischen Apertur NA und einer Pinhole-Größe AU wie folgt beschreibt:

$$ra_0[z, lambda] = rt01[lambda] * w0[lambda] / w[z, lambda];$$

$$ra_i[d, z, lambda] = w0[lambda] / w[z, lambda] * (1-rt01[lambda]^2) * rt10[lambda]^{(i-1)} * rt12[lambda]^i * expterm;$$

wobei w0[lambda] einen kleinsten lateralen Strahldurchmesser angibt, welcher genau im Fokus vorkommt, und im mathematischen Modell aus der Wellenlänge lambda, der numerischen Apertur NA und der Größe des Pinholes AU bestimmt wird,
wobei der Strahldurchmesser w[z, lambda] als Funktion von z und durch w0[lambda] und abhängig von lambda, AU und NA beschrieben wird;
wobei 1-rt01[lambda] einen Lichtanteil beschreibt, der an der Schichtoberseite (21) transmittiert und nicht reflektiert wird,
wobei rt10[lambda] einen Lichtanteil berücksichtigt, der an der Schichtunterseite (22) reflektiert wird,

wobei rt12[lambda] einen Lichtanteil berücksichtigt, der von der Schichtunterseite (22) kommend an der Schichtoberseite (21) transmittiert wird,
wobei expterm eine Welle, dargestellt als Exponentialterm mit imaginärem i, beschreibt.

**13.** Mikroskopieverfahren nach Anspruch 12,

**dadurch gekennzeichnet,**
**dass** für mehrere lateral versetzte Probenpunkte jeweils mindestens eine Messkurve (41, 45) aufgenommen und eine Schichtdicke d ermittelt wird,
**dass** eine Extinktion des Schichtmaterials an einem Probenpunkt als umso höher angenommen wird, je niedriger eine hintere Intensitätsbande in der jeweiligen Messkurve (41, 45) ist, und
**dass** eine Extinktionskarte zu den Probenpunkten ermittelt wird, wobei die Extinktionskarte zu jedem Probenpunkt einen Extinktionswert oder einen Relativwert der Extinktion relativ zu den übrigen Probenpunkten angibt.

## Claims

**1.** A confocal microscope for determination of a layer thickness, comprising:

- optical components (17, 18) for guiding and focusing illumination light (11) onto a specimen (20);
- a focus adjusting device (19) which is configured to adjust a relative displacement between a focus position of the illumination light (11) and a specimen position along an optical axis (16) of the confocal microscope;
- a light measuring device (30) which is arranged for confocal measurement of illumination light (11) coming from the specimen (20), wherein measurement signals belonging to different settings of the focus adjusting device (19) can be recorded with the light measuring device (30);
- an evaluation and control device (35) for determining a layer thickness d of the specimen (20), to which purpose the evaluation and control device (35) is configured to determine intensity band positions (46, 47) of at least two intensity bands in a measurement graph (41, 45) recorded by the light measuring device (30), the measurement graph (41, 45) indicating a measured light intensity Int[z] in dependence of the focus position, and to determine a layer thickness d on the basis of a positional difference (A) between the intensity band positions (46, 47);

**characterized in that**
the evaluation and control device (35) is configured to determine the layer thickness d using a mathematical model which describes for overlapping intensity bands a dependence of the intensity band positions (46, 47) on at least a light wavelength lambda and the layer thickness d, considering interference of the illumination light (11) at the layer **in that** the mathematical model describes the measured light intensity Int[z] through Int[z] = (rao[z, lambda] + ra$_i$[d, z, lambda])^2 and thus as depending on a sum of a coefficient of reflection rao[z, lambda] for a reflection at a layer top side (21) and one or more coefficients of reflection ra$_i$[d, z, lambda] for a reflection at a layer bottom side (22) or for multiple reflections, where "i" indicates the number of considered reflections, wherein an impact on the measured light intensity Int[z] through interference, which is caused by light reflections at the layer top side (21) and at the layer bottom side (22), is included in the mathematical model through the coefficients of reflection ra$_0$[z, lambda], ra$_i$[d, z, lambda], wherein the coefficients of reflection rao[z, lambda], ra$_i$[d, z, lambda] are expressed with a formula which describes a lateral extension of a beam diameter w[z, lambda] for different positions in a height direction z depending on at least the wavelength lambda, a numerical aperture NA and a pinhole size AU, as follows:

$$ra_0[z, \text{lambda}] = rt01[\text{lambda}] * w0[\text{lambda}] / w[z, \text{lambda}];$$

$$ra_i[d, z, \text{lambda}] = w0[\text{lambda}] / w[z, \text{lambda}] * (1\text{-}rt01[\text{lambda}]^2) *$$
$$rt10[\text{lambda}]^{(i-1)} * rt12[\text{lambda}]^i * \text{expterm};$$

wherein w0[lambda] indicates a smallest lateral beam diameter, which occurs exactly in the focus, and which is determined in the mathematical model from the wavelength lambda, the numerical aperture NA and the size of the pinhole AU,

wherein the beam diameter w[z, lambda] is described as a function of z and by w0[lambda] and as dependent of lambda, AU and NA;

wherein 1-rt01[lambda] describes a light portion that is transmitted and not reflected at the layer top side (21),

wherein rt10[lambda] considers a light portion that is reflected at the layer bottom side (22),

wherein rt12[lambda] considers a light portion that comes from the layer bottom side (22) and is transmitted at the layer top side (21),

wherein expterm describes a wave, represented as an exponential expression with imaginary i.

2. The confocal microscope as defined in claim 1,
   **characterized in that**
   the evaluation and control device (35) is configured to determine from a recorded measurement graph (45), which plots a measured light intensity in dependence of the focus position, a respective intensity band position (46, 47) for a plurality of intensity bands by calculating a geometrical center of gravity from all data within a full width at half maximum of the respective intensity band.

3. The confocal microscope as defined in claim 1 or 2,
   **characterized in that**
   in the mathematical model the intensity band positions (46, 47) depend on refractive indices of a material of a layer to be examined (23) as well as on refractive indices of neighboring materials.

4. The confocal microscope as defined in any one of the claims 1 to 3,
   **characterized in that**
   the evaluation and control device (35) is configured to record a plurality of measurement graphs (45) with illumination light (11) of different wavelengths, using the light measuring device (30), and to determine a respective positional difference (A) of two intensity band positions (46, 47) from each measurement graph (45), for unambiguously assigning the positional difference (A) of two intensity band positions (46, 47) to a layer thickness d.

5. The confocal microscope as defined in any one of the claims 1 to 4,
   **characterized in that**
   in the mathematical model, the profile of a Gaussian beam is assumed for the axial z dependency of the beam diameter, wherein the profile is described by:

   $$w[z, \text{lambda}] = w0[\text{lambda}] * \text{sqrt} \left(1 + \left(z/\pi/(AU/4/NA)^2 / \text{lambda}\right)^2\right)$$

   where sqrt indicates the square root of the following expression.

6. The confocal microscope as defined in any one of the claims 1 to 5,
   **characterized in that**
   the evaluation and control device (35) is configured to

   - set different pinhole settings AU of a pinhole (15) of a confocal imaging onto the light measuring device (30) are set,
   - record a respective measurement graph (45) with the light measuring device (30) for each pinhole setting AU
   - wherein the mathematical model describes how a positional difference (A) of two intensity band positions (46, 47) depend on a pinhole setting AU, whereby by using the knowledge of the different pinhole settings AU ambiguities in assigning positional differences (A) of two intensity band positions (46, 47) to a layer thickness d are ruled out,

   for unambiguously assigning the positional difference (A) of two intensity band positions (46, 47) to a layer thickness d,

   from the different measurement graphs (45), a respective positional difference (A) of two intensity band positions (46, 47) is determined,

   using the mathematical model, a fit function, which describes positional differences (A) of two intensity band positions (46, 47) in dependence of the pinhole setting AU, is fit to the positional differences (A) determined with different pinhole settings AU.

7. The confocal microscope as defined in claim 6,

**characterized in that**
the evaluation and control device (35) is configured to provide the different settings AU of the pinhole (15), through which the different measurement graphs (45) are recorded, by:

- a size adjustment of the pinhole (15) between measurements of different measurement graphs (45),
- a lateral displacement of the pinhole (15) between measurements of different measurement graphs (45), or

a beam path of the light coming from the specimen (20) is split into different beam paths in which different pinholes are arranged.

8. The confocal microscope as defined in claim 6 or 7,

    **characterized in that**
    for carrying out an airy scan in an image plane or intermediate image plane, a plurality of measurement paths which are laterally separated from one another are formed,
    wherein the laterally separated measurement paths are formed in the image plane or intermediate image plane in particular by optical fibers which are laterally spaced from each other, each optical fiber leading to a respective light detector of the light measuring device (30), or by a plurality of sub airy detector elements that are laterally spaced from each other,
    wherein a lateral distance between the laterally separated measurement paths is smaller than a diffraction disc formed by imaging a point of a specimen layer onto the measurement paths,
    the different settings of the pinhole (15), through which the different measurement graphs (45) are recorded, are formed by the laterally separated measurement paths.

9. The confocal microscope as defined in any one of the claims 1 to 8,
    **characterized in that**
    the evaluation and control device (35) is configured to determine initially, through a reference measurement, parameters of the mathematical model, including at least the numerical aperture, which depend on components (15, 17, 18) of the confocal microscopes.

10. The confocal microscope as defined in any one of the claims 1 to 19,
    **characterized in that**
    the evaluation and control device (35) is configured to verify whether a one-layer system or a zero-layer system is present by:

    - carrying out a one-layer curve fitting in which the measurement graph (45) is described with two intensity bands,
    - carrying out a zero-layer curve fitting in which the measurement graph (45) is described with a single intensity band, and
    - assuming a one-layer system if a curve fitting result of the one-layer curve fitting has a better quality than a curve fitting result with the zero-layer curve fitting.

11. The confocal microscope as defined in any one of the claims 1 to 10,
    **characterized in that**
    for unambiguously assigning the positional difference (A) between two intensity band positions (46, 47) to a layer thickness d, the evaluation and control device (35) is configured to:

    - set different numerical apertures NA,
    - record a respective measurement graph (45) with the light measuring device (30) for each set numerical aperture NA,
    - wherein the mathematical model describes how a positional difference (A) of two intensity band positions (46, 47) depends on the numerical aperture NA, whereby ambiguities in assigning positional differences (A) between two intensity band positions (46, 47) to a layer thickness d are avoided with the knowledge of the set numerical apertures NA.

12. A microscopy method for determination of a layer thickness with a confocal microscope (100), comprising:

    - guiding illumination light (11) via optical components (17, 18) to a specimen (20);
    - adjusting a focus position of the illumination light (11) relative to a specimen position along an optical axis (16) of the confocal microscope (100) by means of a focus adjusting device (19);

- confocally measuring illumination light (11) coming from the specimen (20) by means of a light measuring device (30), wherein measurement signals belonging to different settings of the focus adjusting device (19) are recorded with the light measuring device (30);

- determining a layer thickness (d) of the specimen (20) by means of an evaluation and control device (35), wherein the evaluation and control device (35) determines intensity band positions (46, 47) of at least two intensity bands from a measurement graph (41, 45) recorded with the light measuring device (30), wherein the measurement graph (41, 45) indicates a measured light intensity in dependence of the focus position, and wherein the evaluation and control device (35) determines a layer thickness (d) on the basis of a positional difference (A) between the intensity band positions (46, 47),

**characterized in that**

the evaluation and control device (35) determines the layer thickness d using a mathematical model which describes for overlapping intensity bands a dependency of intensity band positions (46, 47) on at least a light wavelength lambda and the layer thickness d, considering interference of the illumination light (11) at a layer (23) of the specimen (20), layer **in that** the mathematical model describes the measured light intensity Int[z] through Int[z] = (rao[z, lambda] + ra$_i$[d, z, lambda])^2 and thus as depending on a sum of a coefficient of reflection rao[z, lambda] for a reflection at a layer top side (21) and one or more coefficients of reflection ra$_i$[d, z, lambda] for a reflection at a layer bottom side (22) or for multiple reflections, where "i" indicates the number of considered reflections, wherein an impact on the measured light intensity Int[z] through interference, which is caused by light reflections at the layer top side (21) and at the layer bottom side (22), is included in the mathematical model through the coefficients of reflection rao[z, lambda], ra$_i$[d, z, lambda], wherein the coefficients of reflection rao[z, lambda], ra$_i$[d, z, lambda] are expressed with a formula which describes a lateral extension of a beam diameter w[z, lambda] for different positions in a height direction z depending on at least the wavelength lambda, a numerical aperture NA and a pinhole size AU, as follows:

$$ra_0[z, lambda] = rt01[lambda] * w0[lambda] / w[z, lambda];$$

$$ra_i[d, z, lambda] = w0[lambda] / w[z, lambda] * (1\text{-}rt01[lambda]^2) * rt10[lambda]^{\wedge}(i\text{-}1) * rt12[lambda]^{\wedge}i * expterm;$$

wherein w0[lambda] indicates a smallest lateral beam diameter, which occurs exactly in the focus, and which is determined in the mathematical model from the wavelength lambda, the numerical aperture NA and the size of the pinhole AU,

wherein the beam diameter w[z, lambda] is described as a function of z and by w0[lambda] and as dependent of lambda, AU and NA;

wherein 1-rt01[lambda] describes a light portion that is transmitted and not reflected at the layer top side (21),

wherein rt10[lambda] considers a light portion that is reflected at the layer bottom side (22),

wherein rt12[lambda] considers a light portion that comes from the layer bottom side (22) and is transmitted at the layer top side (21),

wherein expterm describes a wave, represented as an exponential expression with imaginary i.

**13.** The microscopy method as defined in claim 12,

**characterized by**:

recording at least one measurement graph (41, 45) and determining a respective layer thickness (d), for each of a plurality of laterally different specimen points,

assuming an extinction of the layer material at a specimen point to be higher, the lower a rear intensity band in the respective measurement graph (41, 45), and

determining an extinction map of the specimen points, wherein the extinction map indicates an extinction value or a relative value of extinction relative to the other specimen points for each specimen point.

**Revendications**

1. Microscope confocal de mesure d'une épaisseur de couche, comprenant :

   - des éléments optiques (17, 18) de guidage et de focalisation de lumière d'illumination (11) sur un échantillon (20) ;
   - un dispositif d'ajustage de foyer (19), qui est configuré pour effectuer un ajustage relatif entre une position de foyer de la lumière d'illumination (11) et une position d'échantillon le long d'un axe optique (16) du microscope confocal ;
   - un dispositif de mesure de lumière (30), qui est disposé pour mesurer de manière confocale de la lumière d'illumination (11) provenant de l'échantillon (20), des signaux de mesure relatifs à différents réglages du dispositif d'ajustage de foyer (19) étant enregistrables avec le dispositif de mesure de lumière (30) ;
   - un dispositif d'évaluation et de contrôle (35) pour déterminer une épaisseur de couche d de l'échantillon (20), le dispositif d'évaluation et de contrôle (35) étant configuré à cet effet pour déterminer, à partir d'une courbe de mesure (41, 45) enregistrée par le dispositif de mesure de lumière (30) et indiquant une intensité de lumière Int[z] mesurée en fonction de la position de foyer, des positions de bande d'intensité (46, 47) d'au moins deux bandes d'intensité et pour déduire une épaisseur de couche d sur la base d'une différence de position (A) entre les positions de bande d'intensité (46, 47) ;

   **caractérisé en ce que**
   le dispositif d'évaluation et de contrôle (35) est configuré pour déduire l'épaisseur de couche d à l'aide d'un modèle mathématique qui décrit, pour des bandes d'intensité qui se chevauchent, une dépendance des positions de bande d'intensité (46, 47) d'au moins une longueur d'onde de lumière lambda et de l'épaisseur de couche d tout en prenant en compte de l'interférence de la lumière d'illumination (11) à la couche, le modèle mathématique décrivant l'intensité de lumière Int[z] mesurée par Int[z] = (rao[z, lambda] + ra$_i$[d, z, lambda])^2 et donc comme dépendant d'une somme d'un coefficient de réflexion rao[z, lambda] pour une réflexion à une face supérieure (21) de la couche et d'un ou plusieurs coefficients de réflexion ra$_i$[d, z, lambda] pour une réflexion à une face inférieure (22) de la couche ou pour des réflexions multiples, le nombre de réflexions prises en considération étant indiqué par « i »,
   un effet sur l'intensité de lumière Int[z] mesurée dû à de l'interférence résultant d'une réflexion de lumière à la face supérieure (21) de la couche et à la face inférieure (22) de la couche étant intégré dans le modèle mathématique par les coefficients de réflexion rao[z, lambda], ra$_i$[d, z, lambda], les coefficients de réflexion rao[z, lambda], ra$_i$[d, z, lambda] étant exprimés par une formule qui décrit une extension latérale d'un diamètre de faisceau w[z, lambda] pour différentes positions dans une direction de hauteur z en fonction au moins de la longueur d'onde de lumière lambda, d'une ouverture numérique NA et d'une taille de sténopé AU comme suit:

$$\text{ra}_0[z, \text{lambda}] = \text{rt01}[\text{lambda}] * \text{w0}[\text{lambda}] / \text{w}[z, \text{lambda}]$$

$$\text{ra}_i[d, z, \text{lambda}] = \text{w0}[\text{lambda}] / \text{w}[z, \text{lambda}] * (1-\text{rt01}[\text{lambda}]^2) * \text{rt10}[\text{lambda}]^{(i-1)} * \text{rt12}[\text{lambda}]^i * \text{expterm} ;$$

   où w0[lambda] indique un diamètre de faisceau latéral le plus petit, qui se produit exactement dans le foyer, et est déterminé dans le modèle mathématique à partir de la longueur d'onde lambda, de l'ouverture numérique NA et de la taille du sténopé AU,
   où le diamètre de faisceau w[z, lambda] est décrit en fonction de z et par w0[lambda] et en fonction de lambda, AU et NA ;
   où 1-rt01[lambda] décrit une part de lumière qui est transmise et non réfléchie à la face supérieure (21) de la couche,
   où rt10[lambda] prend en compte une part de lumière qui est réfléchie à la face inférieure (22) de la couche,
   où rt12[lambda] prend en compte une part de lumière en provenance de la face inférieure (22) de la couche qui est transmise à la face supérieure (21) de la couche,
   où expterm décrit une onde, représentée par un terme exponentiel avec un i imaginaire.

2. Microscope confocal selon la revendication 1,

**caractérisé en ce que**
le dispositif d'évaluation et de contrôle (35) est configuré pour déterminer, à partir d'une courbe de mesure (45) enregistrée qui indique une intensité de lumière mesurée en fonction de la position de foyer, une position de bande d'intensité (46, 47) respective pour plusieurs bandes d'intensité, un centre géométrique étant calculé à partir de toutes les données à l'intérieur d'une largeur de demi-valeur de la bande d'intensité respective.

3. Microscope confocal selon la revendication 1 ou 2,
   **caractérisé en ce que**,
   dans le modèle mathématique, les positions des bande d'intensité (46, 47) dépendent d'indices de réfraction d'un matériau d'une couche à analyser (23) ainsi que de matériaux limitrophes à celle-ci.

4. Microscope confocal selon l'une des revendications 1 à 3,
   **caractérisé en ce que**,
   afin d'attribuer sans équivoque la différence de position (A) entre deux positions de bande d'intensité (46, 47) à une épaisseur de couche d, le dispositif d'évaluation et de contrôle (35) est configuré pour enregistrer plusieurs courbes de mesure (45) avec de la lumière d'illumination (11) de différentes longueurs d'onde avec le dispositif de mesure de lumière (30) et pour déterminer à partir de chaque courbe de mesure (45) une différence de position (A) respective entre deux positions de bande d'intensité (46, 47).

5. Microscope confocal selon l'une des revendications 1 à 4,
   **caractérisé en ce que**,
   dans le modèle mathématique, pour la dépendance axiale z du diamètre de faisceau, le profil d'un faisceau gaussien est supposé qui est décrit par :

$$w[z, lambda] = w0[lambda] * sqrt (1 + ( z/\pi/(AU/4/NA)\text{^}2 / lambda )\text{^}2 ).$$

où sqrt désigne la racine de l'expression qui suit.

6. Microscope confocal selon l'une des revendications 1 à 5,

   **caractérisé en ce que**,
   afin d'attribuer sans équivoque la différence de position (A) entre deux positions de bande d'intensité (46, 47) à une épaisseur de couche d, le dispositif d'évaluation et de contrôle (35) est configuré :

   - pour effectuer différents réglages de sténopé AU d'un sténopé (15) d'une imagerie confocale sur le dispositif de mesure de lumière (30),
   - pour enregistrer pour chaque réglage de sténopé AU une courbe de mesure (45) respective avec le dispositif de mesure de lumière (30),
   - le modèle mathématique décrivant une dépendance d'une différence de position (A) entre deux positions de bande d'intensité (46, 47) d'un réglage de sténopé AU, ce qui permet, grâce à la connaissance des différents réglages de sténopé AU, d'éliminer des ambiguïtés dans l'attribution de différences de position (A) entre deux positions de bande d'intensité (46, 47) à une épaisseur de couche d,

   une différence de position (A) entre deux positions de bande d'intensité (46, 47) est respectivement déterminée à partir des différentes courbes de mesure (45),
   une fonction fit décrivant des différences de position (A) entre deux positions de bande d'intensité (46, 47) en fonction du réglage de sténopé AU est adaptée aux différences de position (A) déterminées pour différents réglages de sténopé AU au moyen du modèle mathématique.

7. Microscope confocal selon la revendication 6,
   **caractérisé en ce que**
   le dispositif d'évaluation et de contrôle (35) est configuré pour générer les différents réglages AU du sténopé (15) par lesquels les différentes courbes de mesure (45) sont enregistrées par :

   - un réglage de la taille du sténopé (15) entre les mesures de différentes courbes de mesure (45),
   - un déplacement latéral du sténopé (15) entre les mesures de différentes courbes de mesure (45), ou

un chemin optique de la lumière provenant de l'échantillon (20) est séparé en différents chemins optiques dans lesquels différents sténopés sont disposés.

8. Microscope confocal selon la revendication 6 ou 7,

   **caractérisé en ce que**,
   pour effectuer un balayage d'Airy dans un plan d'image ou dans un plan d'image intermédiaire, plusieurs chemins de mesure séparés latéralement les uns des autres sont formés,
   les chemins de mesure séparés latéralement dans le plan d'image ou dans le plan d'image intermédiaire étant formés en particulier par des fibres optiques décalées latéralement les unes par rapport aux autres, lesquelles mènent respectivement à un détecteur de lumière du dispositif de mesure de lumière (30), ou par plusieurs éléments de détection sous-Airy décalés latéralement, une distance latérale entre les chemins de mesure séparés latéralement étant inférieure à une tache de diffraction comme quoi un point d'un plan d'échantillon est imagé sur les chemins de mesure,
   les différents réglages du sténopé (15) par lesquels les différentes courbes de mesure (45) sont enregistrées sont formés par les chemins de mesure séparés latéralement.

9. Microscope confocal selon l'une des revendications 1 à 8,
   **caractérisé en ce que**
   le dispositif d'évaluation et de contrôle (35) est configuré pour déterminer préalablement, par une mesure de référence, des paramètres du modèle mathématique, y compris au moins l'ouverture numérique, conditionnés par des composants (15, 17, 18) du microscope confocal.

10. Microscope confocal selon l'une des revendications 1 à 9,
    **caractérisé en ce que**,
    afin de vérifier si l'on est en présence d'un système à une couche et non d'un système à zéro couche, le dispositif d'évaluation et de contrôle (35) est configuré :

    - pour effectuer un ajustement fonctionnel à une couche, dans lequel la courbe de mesure (45) est décrite par deux bandes d'intensité,
    - pour effectuer un ajustement fonctionnel à zéro couche, dans lequel la courbe de mesure (45) est décrite par une seule bande d'intensité, et
    - pour supposer un système à une couche si un résultat d'ajustement fonctionnel avec l'ajustement fonctionnel à une couche présente une qualité supérieure à un résultat d'ajustement fonctionnel avec l'ajustement fonctionnel à zéro couche.

11. Microscope confocal selon l'une des revendications 1 à 10,
    **caractérisé en ce que**,
    afin d'attribuer sans équivoque la différence de position (A) entre deux positions de bande d'intensité (46, 47) à une épaisseur de couche d, le dispositif d'évaluation et de contrôle (35) est configuré :

    - pour régler différentes ouvertures numériques NA et
    - pour enregistrer, pour chaque ouverture numérique NA réglée, une courbe de mesure (45) respective avec le dispositif de mesure de lumière (30),
    - le modèle mathématique décrivant une dépendance d'une différence de position (A) entre deux positions de bande d'intensité (46, 47) de l'ouverture numérique NA, ce qui permet, grâce à la connaissance des ouvertures numériques NA réglées, d'éviter des ambiguïtés dans l'attribution de différences de position (A) entre deux positions de bandes d'intensité (46, 47) à une épaisseur de couche d.

12. Procédé de microscopie pour mesurer une épaisseur de couche par un microscope confocal (100), comprenant :

    - guider de la lumière d'illumination (11) sur un échantillon (20) via des éléments optiques (17, 18) ;
    - ajuster une position de foyer de la lumière d'illumination (11) relativement à une position d'échantillon le long d'un axe optique (16) du microscope confocal (100) au moyen d'un dispositif d'ajustage de foyer (19) ;
    - mesurer de manière confocale de la lumière d'illumination (11) provenant de l'échantillon (20) au moyen d'un dispositif de mesure de lumière (30), des signaux de mesure étant enregistrés avec le dispositif de mesure de lumière (30) pour différents réglages du dispositif d'ajustage de foyer (19) ;
    - déterminer une épaisseur de couche d de l'échantillon (20) par un dispositif d'évaluation (35), le dispositif d'évaluation (35) déterminant à cet effet, à partir d'une courbe de mesure (41, 45) enregistrée par le dispositif de mesure de lumière (30) et indiquant une intensité de lumière Int[z] mesurée en fonction de la position de foyer, des positions de bande d'intensité (46, 47) d'au moins deux bandes d'intensité et déduisant une épaisseur de couche d sur la base d'une différence de position (A) entre les positions de bande d'intensité (46, 47),

**caractérisé en ce que**
le dispositif d'évaluation (35) déduit l'épaisseur de couche d à l'aide d'un modèle mathématique qui décrit, pour des bandes d'intensité qui se chevauchent, une dépendance des positions de bande d'intensité (46, 47) d'au moins une longueur d'onde de lumière lambda et de l'épaisseur de couche d tout en prenant en compte de l'interférence de la lumière d'illumination (11) à une couche de l'échantillon, le modèle mathématique décrivant l'intensité de lumière Int[z] mesurée par Int[z] = (rao[z, lambda] + ra$_i$[d, z, lambda])^2 et donc comme dépendant d'une somme d'un coefficient de réflexion rao[z, lambda] pour une réflexion à une face supérieure (21) de la couche et d'un ou plusieurs coefficients de réflexion ra$_i$[d, z, lambda] pour une réflexion à une face inférieure (22) de la couche ou pour des réflexions multiples, le nombre de réflexions prises en considération étant indiqué par « i »,,
un effet sur l'intensité de lumière Int[z] mesurée dû à de l'interférence résultant d'une réflexion de lumière à la face supérieure (21) de la couche et à la face inférieure (22) de la couche étant intégré dans le modèle mathématique par les coefficients de réflexion rao[z, lambda], ra$_i$[d, z, lambda], les coefficients de réflexion rao[z, lambda], ra$_i$[d, z, lambda] étant exprimés par une formule qui décrit une extension latérale d'un diamètre de faisceau w[z, lambda] pour différentes positions dans une direction de hauteur z en fonction au moins de la longueur d'onde de lumière lambda, d'une ouverture numérique NA et d'une taille de sténopé AU comme suit:

$$ra_0[z, lambda] = rt01[lambda] * w0[lambda] / w[z, lambda]$$

$$ra_i[d, z, lambda] = w0[lambda] / w[z, lambda] * (1\text{-}rt01[lambda]^2) *$$
$$rt10[lambda]^{\wedge}(i\text{-}1) * rt12[lambda]^{\wedge}i * expterm ;$$

où w0[lambda] indique un diamètre de faisceau latéral le plus petit, qui se produit exactement dans le foyer, et est déterminé dans le modèle mathématique à partir de la longueur d'onde lambda, de l'ouverture numérique NA et de la taille du sténopé AU,
où le diamètre de faisceau w[z, lambda] est décrit en fonction de z et par w0[lambda] et en fonction de lambda, AU et NA ;
où 1-rt01 [lambda] décrit une part de lumière qui est transmise et non réfléchie à la face supérieure (21) de la couche,
où rt10[lambda] prend en compte une part de lumière qui est réfléchie à la face inférieure (22) de la couche,
où rt12[lambda] prend en compte une part de lumière en provenance de la face inférieure (22) de la couche qui est transmise à la face supérieure (21) de la couche,
où expterm décrit une onde, représentée par un terme exponentiel avec un i imaginaire.

13. Procédé de microscopie selon la revendication 12,

**caractérisé en ce que**,
pour plusieurs points d'échantillon décalés latéralement, au moins une courbe de mesure (41, 45) respective est enregistrée et une épaisseur de couche d est déterminée,
une extinction du matériau de couche en un point d'échantillon est supposée être d'autant plus élevée qu'une bande d'intensité arrière dans la courbe de mesure respective (41, 45) est basse, et
une carte d'extinction est déterminée pour les points d'échantillon, la carte d'extinction indiquant pour chaque point d'échantillon une valeur d'extinction ou une valeur relative de l'extinction relativement aux autres points d'échantillon.

Fig. 1

Fig. 2

Fig. 3

Fig. 4

**Fig. 5**

**Fig. 6**

Fig. 7

lambda [µm]

## Fig. 8

## Fig. 9

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 102010016462 B4
- JP 2005266084 A

**In der Beschreibung aufgeführte Nicht-Patentliteratur**

- **LI-PIIN SUNG et al.** *JCT Research,* Oktober 2004, vol. 1 (4
- **VON MENG-CHI LI et al.** *APPLIED OPTICS,* 20. Dezember 2012, vol. 51 (36
- **VON EVANGELOS PAPASTATHOPOULOS et al.** *APPLIED OPTICS,* 10. November 2006, vol. 45 (32
- **VON T. FUKANO et al.** *APPLIED OPTICS,* 01. Juli 1999, vol. 38 (19
- **VON MASA ISHIGAMI et al.** *Nano Letters,* 2007, vol. 7, 1643
- **HANS ARWIN.** *Thin Solid Films,* 2000, vol. 377-378
- **DER ARTIKEL ; KATSUICHI KITAGAWA.** Thin film thickness profile measurement using an interferometric surface profiler. *Proceedings of SPIE,* Oktober 2007, vol. 6716
- **VON CORLE et al.** *Applied Optics,* 15. Juni 1987, vol. 26 (12), 2416-2420
- **VON GUY COX et al.** *Micron,* 01. Oktober 2001, vol. 32 (7